# EUROPEAN PATENT APPLICATION

(11) **EP 4 848 826 A1**
(43) Date of publication of application: **02.12.2026**
(21) Application number: 25751702.9
(22) Date of filing: 08.02.2025
(51) Int. Cl.: H04W 48/08

(54) **COMMUNICATION METHOD AND APPARATUS**

(30) Priority: 08.02.2024 CN 202410179993
(71) Applicant: Huawei Technologies Co., Ltd., Shenzhen, Guangdong 518129 (CN)
(72) Inventor: HAN, Zhilin, Shenzhen, Guangdong 518129 (CN); PAN, Qi, Shenzhen, Guangdong 518129 (CN); DENG, Taoyu, Shenzhen, Guangdong 518129 (CN); LI, Yongcui, Shenzhen, Guangdong 518129 (CN)
(74) Representative: Huawei European IPR
(86) International application number: PCT/CN2025/076406
(87) International publication number: WO 2025/168092

(57) **Abstract**

This application relates to the field of communication technologies, and provides a communication method and apparatus. The method includes: A first network device receives a first message from a second network device, where the first message includes a first identifier, the first identifier indicates context information of a first terminal equipment, and the first message indicates the first network device to store the context information of the first terminal equipment. The first network device maintains a connection to the second network device in a first area, and the first network device maintains a connection to the first terminal equipment in a second area, where the first area is different from the second area. In embodiments of this application, the first network device can store the context information of the first terminal equipment when the first network device can communicate with the second network device, thereby avoiding context deletion caused by disconnection of an underlying connection between the first network device and the second network device due to movement of the first network device.

## Description

This application claims priority to Chinese Patent Application No. 202410179993.7, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

In a non-terrestrial network (non-terrestrial network, NTN) system, a satellite can communicate with a core network device via a gateway (NTN gateway), and the satellite may further communicate with a terminal equipment. The satellite may serve as an access network device, a link between the gateway and the satellite is a feeder link (feeder link), and a link between the satellite and the terminal equipment is a service link (service link).

It can be learned from the foregoing that, when the satellite is connected to the gateway, due to relative movement between the satellite and the gateway, once the satellite moves out of a communication range of the gateway, an underlying connection to the core network is disconnected, and an upper-layer communication connection is disconnected. As a result, contexts in access networks and core networks may be deleted, and the connections cannot be quickly resumed again by using the contexts.

### SUMMARY

This application provides a communication method and apparatus, to store context information of a terminal equipment in a timely manner in a satellite scenario.

According to a first aspect, this application provides a communication method. The method may be performed by a first network device, may be performed by a component (for example, a processor, a chip, or a chip system) in a first network device, or may be performed by a logical module or software that can implement all or a part of functions of a first network device. The method includes: A first network device receives a first message from a second network device, where the first message includes a first identifier, the first identifier indicates context information of a first terminal equipment, and the first message indicates the first network device to store the context information of the first terminal equipment. The first network device maintains a connection to the second network device in a first area, and the first network device maintains a connection to the first terminal equipment in a second area, where the first area is different from the second area.

It should be understood that, in this embodiment of this application, because a satellite continuously moves, when the satellite enters a communication range in which the satellite can be connected to a gateway or a terminal equipment, a context of the terminal equipment that is stored in a suspend procedure needs to be resumed and data needs to be stored. In addition, when the satellite leaves the communication range in which the satellite can be connected to the gateway or the terminal equipment, the context of the terminal equipment needs to be suspended, so as to avoid sudden disconnection of a communication connection when the satellite leaves the communication range.

According to the solution provided in this embodiment of this application, when the first network device can communicate with the second network device, the first network device can store the context information of the terminal equipment by using the first message sent by the second network device, thereby avoiding context information deletion caused by disconnection of an underlying connection between the first network device and the second network device when the first network device leaves the first area.

That the first network device stores (stores) the context information of the first terminal equipment may be understood as that the first network device suspends (suspends) the context information of the first terminal equipment, or that the first network device stores (keeps) the context information of the first terminal equipment, or the like. This is not limited in this application.

It should be understood that the first network device may be an access network device or another network device, for example, a core network device. The first network device may be a network device on-board. The second network device may be another network device different from the first network device, for example, another core network device. The second network device may be a terrestrial network device.

It should be understood that the context information of the first terminal indicated by the first identifier, for example, an NG interface context, is stored in the first network device and the second network device.

With reference to the first aspect, in some implementations of the first aspect, before the first network device receives the first message from the second network device, the first network device sends a third message to the second network device, where the third message includes the first identifier, and the third message indicates the second network device to store the context information of the first terminal equipment.

In the solution provided in this embodiment of this application, the first network device may indicate that the context information of the terminal equipment is stored when the first network device can communicate with the second network device. That the communication with the second network device is possible may also be understood as that a feeder link is still connected, or a satellite in which the first network device is located can cover the gateway connected to the second network device.

With reference to the first aspect, in some implementations of the first aspect, that the first network device sends the third message to the second network device includes: The first network device determines, based on at least one of sensing information, location information of the first terminal equipment, and ephemeris information, to send the third message to the second network device.

In the solution provided in this embodiment of this application, a triggering scenario of the first network device is further extended. The first network device may trigger a suspend procedure based on at least one of the sensing information, the location information of the first terminal equipment, and the ephemeris information, so as to keep the context information of the first terminal equipment.

In some embodiments, the first network device determines, based on at least one of the sensing information, the location information of the first terminal equipment, the ephemeris information, satellite coverage information, and gateway location information, to send the third message to the second network device.

With reference to the first aspect, in some implementations of the first aspect, that the first network device determines, based on the at least one of the sensing information, the location information of the first terminal equipment, and the ephemeris information, to send the third message to the second network device includes: The first network device determines, based on the sensing information, to send the third message to the second network device, where when the first network device determines, based on the sensing information, that the first network device is not connected to the first terminal equipment, the first network device determines to send the third message to the second network device. Alternatively, the first network device determines, based on the location information of the first terminal equipment, to send the third message to the second network device, where when the communication range of the first network device is not capable of covering a location of the first terminal equipment, the first network device determines to send the third message to the second network device. Alternatively, the first network device determines, based on the ephemeris information, to send the third message to the second network device, where the first network device determines, based on the ephemeris information, a first moment at which the first network device is to leave the first area, and before the first moment, the first network device determines to send the third message to the second network device.

Optionally, the first network device determines, based on a historical connection status, to send the third message to the second network device. When the connection between the first network device and the first terminal equipment is disconnected, the first network device determines to send the third message to the second network device. After resuming the connection to the second network device in the first area, the first network device sends the third message to the second network device.

It should be understood that, in the conventional technology, when the satellite leaves the second area in which the satellite can maintain a connection to the terminal equipment, suspending cannot be performed through communication. However, in this embodiment of this application, the current connection status may be determined based on the sensing information, and storage of the context information of the terminal equipment is triggered when the first network device determines that the first network device is not connected to the terminal equipment. Alternatively, when the first network device leaves a communication range of the terminal equipment, storage of the context information of the terminal equipment is triggered based on the location information of the terminal equipment or ephemeris information, so that the first network device can store the context information of the terminal equipment after being connected to the second network device.

That the first network device, determines, based on the sensing information, that the first network device is not connected to the terminal equipment may be understood as that the first network device learns that there is no service link connection to the terminal equipment in this case. The sensing information may be from the first network device or another device on-board. That there is no service link connection may be understood as that there is no direct service link connection between the first network device and the first terminal equipment, or that there is no service link connection between the first network device and the first terminal equipment after the first network device is connected through an inter-satellite link.

Optionally, the first network device determines, based on the ephemeris information, the satellite coverage information, and/or the gateway location information, to send the third message to the second network device, where the first network device determines, based on the ephemeris information, the satellite coverage information, and/or the gateway location information, a first moment at which the first network device is to leave the first area, and before the first moment, the first network device determines to send the third message to the second network device.

It should be understood that the first network device may determine, based on at least one of the ephemeris information, the satellite coverage information, and the gateway location information, the first moment at which the first network device is to leave the first area.

Optionally, the first network device determines, based on the ephemeris information, the satellite coverage information, and/or the gateway location information, a time period in which the first network device is located in the first area, and in the time period, the first network device determines to send the third message to the second network device.

With reference to the first aspect, in some implementations of the first aspect, the context information of the first terminal equipment includes a user plane context of the first terminal equipment and/or a control plane context of the first terminal equipment.

In the solution provided in this embodiment of this application, the user plane context of the terminal equipment and/or the control plane context of the terminal equipment are/is retained by using a user plane context of the first terminal equipment, to meet different scenario requirements.

With reference to the first aspect, in some implementations of the first aspect, the first message further indicates keep time for the context information of the first terminal equipment by the first network device, and when current time exceeds the keep time, the first network device deletes the context information of the first terminal equipment.

In the solution provided in this embodiment of this application, the first message indicates the keep time for the context information of the terminal equipment by the first network device, so that indication performed through the second network device can be avoided, a suspend procedure can be dynamically implemented, and the context information can be deleted in a timely manner after the time expires, thereby saving satellite resources.

It should be understood that the current time exceeding the keep time may be understood as that the current time is after keep end time of the context information, or current keep duration of the context information exceeds preset keep duration.

With reference to the first aspect, in some implementations of the first aspect, the first network device receives a fourth message from the second network device, where the fourth message indicates the first network device to delete the context information of the first terminal equipment.

In the solution provided in this embodiment of this application, the fourth message of the second network device indicates context information deletion, so that the keep time for the context information is not recorded, and satellite resource overheads can be further reduced.

With reference to the first aspect, in some implementations of the first aspect, after the first network device receives the first message from the second network device, the first network device sends a second message to the first terminal equipment, where the second message includes a second identifier, and the second identifier indicates to resume the context information of the first terminal equipment.

Resuming the context information of the first terminal equipment may be understood as resuming the first terminal equipment, that is, resuming the context of the first terminal equipment. The first network device and the first terminal equipment may communicate with each other by using the context of the first terminal equipment.

It should be understood that the context information of the first terminal indicated by the second identifier, for example, a Uu interface context, is stored in the first terminal equipment and the first network device.

In the solution provided in this embodiment of this application, the first network device can re-set up a connection to the terminal equipment in the second area based on the context information.

According to a second aspect, this application provides a communication method. The method may be performed by a first network device, may be performed by a component (for example, a processor, a chip, or a chip system) in a first network device, or may be performed by a logical module or software that can implement all or a part of functions of a first network device. The method includes: The first network device receives a third message from a first terminal equipment; and the first network device determines, based on at least one of sensing information and ephemeris information, to send a first message to a second network device, where the first message includes a first identifier, the first identifier indicates context information of the first terminal equipment, and the first message is used to resume the context information of the first terminal equipment. The first network device maintains a connection to the second network device in a first area, and the first network device maintains a connection to the first terminal equipment in a second area, where the first area is different from the second area.

It should be understood that, in the conventional technology, after a terminal equipment sets up a connection to a satellite and triggers a resume procedure, because the satellite has not set up a connection to the second network device, the resume procedure with the second network device cannot be triggered. However, in the solution provided in this embodiment of this application, after storing data of the terminal equipment, the first network device may actively send the first message to the second network device based on at least one of the sensing information and the ephemeris information, so that the resume procedure can be triggered, and data can be stored and forwarded.

The third message may be data and/or signaling sent by the terminal equipment, for example, an uplink NAS PDU or a TAU signaling procedure.

It should be understood that the first network device may be an access network device or another network device, for example, a core network device. The first network device may be a network device on-board. The second network device may be another network device different from the first network device, for example, another core network device.

In some embodiments, the first network device determines, based on at least one of the sensing information, the ephemeris information, satellite coverage information, and gateway location information, to send the first message to the second network device.

With reference to the second aspect, in some implementations of the second aspect, the first network device determines, based on the ephemeris information, to send a second message to the first terminal equipment, where the second message includes the first identifier, and the second message indicates the first terminal equipment to store the context information.

In the solution provided in this embodiment of this application, because the satellite moves, after the terminal equipment sets up a connection to the satellite and triggers a resume procedure, the connection needs to be disconnected. The first network device may indicate, based on the ephemeris information, the terminal equipment to keep the context, thereby avoiding context information deletion caused by disconnection of an underlying connection between the first network device and the terminal equipment when the first network device leaves the second area.

Optionally, the first network device determines, based on at least one of the ephemeris information, the satellite coverage information, and the gateway location information, to send the second message to the first terminal equipment.

With reference to the second aspect, in some implementations of the second aspect, the first network device determines, based on the ephemeris information, a first moment at which the first network device is to leave the second area, and before the first moment, the first network device determines to send the second message to the first terminal equipment.

In this embodiment of this application, the first network device may determine, based on the ephemeris information, that the first network device is about to be disconnected from the terminal equipment, so as to trigger the suspend procedure before the disconnection, thereby keeping the context information of the terminal equipment.

The first network device determines, based on the ephemeris information, the first moment at which the first network device is to leave the second area, and before the first moment, the first network device determines to send the second message to the first terminal equipment.

Optionally, the first network device determines, based on the at least one of the ephemeris information, the satellite coverage information, and the gateway location information, a time period in which the first network device is in the second area, and in the time period, the first network device determines to send the second message to the first terminal equipment.

With reference to the second aspect, in some implementations of the second aspect, the first network device determines, based on the sensing information, to send the first message to the second network device, where when the first network device determines, based on the sensing information, to connect to the second network device, the first network device determines to send the first message to the second network device. Alternatively, the first network device determines, based on the ephemeris information, to send the first message to the second network device, where the first network device determines, based on the ephemeris information, a second moment at which the first network device is to leave the first area, and before the second moment, the first network device determines to send the first message to the second network device.

In the solution provided in this embodiment of this application, the first network device may have an underlying circuit sensing function. In this way, when determining, based on the sensing information, that the first network device is connected to the second network device, or when determining, based on the ephemeris information, that the first network device enters a communication range of the second network device, the first network device may trigger a resume procedure.

Optionally, the first network device determines, based on at least one of the ephemeris information, the satellite coverage information, and the gateway location information, a time period in which the first network device is located in the first area, and in the time period, the first network device determines to send the first message to the second network device.

With reference to the second aspect, in some implementations of the second aspect, the context information of the first terminal equipment includes a user plane context of the first terminal equipment and/or a control plane context of the first terminal equipment.

In the solution provided in this embodiment of this application, the user plane context and/or the control plane context of the terminal equipment are/is resumed, to meet different application scenarios.

With reference to the second aspect, in some implementations of the second aspect, the first network device sends the third message to the second network device. In addition/alternatively, the first network device receives a fourth message from the second network device.

According to the solution provided in this embodiment of this application, after the connection between the first network device and the second network device is resumed, the first network device may send stored data of the terminal equipment to the second network device, and receive data from the second network device.

According to a third aspect, this application provides a communication method. The method may be performed by a second network device, may be performed by a component (for example, a processor, a chip, or a chip system) in a second network device, or may be performed by a logical module or software that can implement all or a part of functions of a second network device. The method includes: The second network device determines, based on first information, to send a first message to a first network device, where the first message includes a first identifier, the first identifier indicates context information of a first terminal equipment, and the first message indicates the first network device to store the context information of the first terminal equipment. The first network device maintains a connection to the second network device in a first area, and the first network device maintains a connection to the first terminal equipment in a second area, where the first area is different from the second area.

It should be understood that the first network device may be an access network device or another network device, for example, a core network device. The first network device may be a network device on-board. The second network device may be another network device different from the first network device, for example, another core network device.

It should be understood that the first information may be obtained by the second network device through receiving, storing, or preconfiguration.

Optionally, the second network device is an access management network element, for example, an access and mobility management function (access and mobility management function, AMF) or a mobility management entity (mobility management entity, MME).

According to the solution provided in this embodiment of this application, the second network device may determine, based on the first information, to send the first message to the first network device, to indicate the first network device to store the context information of the terminal equipment, thereby avoiding context information deletion caused by disconnection of an underlying connection between the first network device and the second network device when the first network device leaves the first area.

With reference to the third aspect, in some implementations of the third aspect, the first information includes information about the first terminal equipment and/or ephemeris information, and that the second network device determines, based on the first information, to send the first message to the first network device includes: When the second network device determines, based on the information about the first terminal equipment, that the first terminal equipment is capable of responding to storage and forwarding, the second network device determines to send the first message to the first network device. Alternatively, when the second network device determines, based on the ephemeris information, that the first network device is capable of leaving the first area, the second network device determines to send the first message to the first network device.

According to the solution provided in this embodiment of this application, the second network device may be triggered, by using the information about the terminal equipment and/or the ephemeris information, to indicate the first network device to store the context information of the terminal equipment.

It should be understood that the first message may indicate that the first terminal equipment has subscribed to a store and forward (store and forward, S&F) service, or the first terminal equipment can use an S&F mode, or the first network device or the second network device needs to provide an S&F service for the first terminal equipment, or an S&F operation needs to be performed on the first terminal equipment, or the first terminal equipment can respond to an S&F service.

Optionally, the first information includes at least one of the information about the first terminal equipment, the ephemeris information, the satellite coverage information, and the gateway location information.

It should be understood that, that the first network device is capable of leaving the first area may be considered as that the communication scenario is a satellite communication scenario. To ensure that the second network device keeps the context information before being disconnected from the first network device, the second network device needs to perform a suspend procedure, in other words, the second network device determines to send the first message to the first network device.

With reference to the third aspect, in some implementations of the third aspect, the information about the first terminal equipment is the context information of the first terminal equipment or configuration information of the first terminal equipment.

In the solution provided in this embodiment of this application, the second network device may determine, based on the context information of the terminal equipment or the configuration information of the terminal equipment, for example, subscription information, whether the terminal equipment can perform a storage and forwarding response, so that the first message is sent when the terminal equipment can perform the storage and forwarding response.

With reference to the third aspect, in some implementations of the third aspect, the second network device determines, based on the ephemeris information, a first moment at which the first network device is to leave the first area, and before the first moment, the second network device determines, based on the information about the first terminal equipment, to send the first message to the first network device.

In the solution provided in this embodiment of this application, the second network device may determine, based on the ephemeris information, that the connection to the first network device is about to be disconnected, so as to indicate, before the connection is disconnected, to store the context information of the terminal equipment.

Optionally, the second network device determines, based on the ephemeris information, a time period in which the first network device is located in the first area, and in the time period, the second network device determines to send the first message to the first network device.

With reference to the third aspect, in some implementations of the third aspect, the second network device receives a second message from the first network device, where the second message indicates the second network device to store the context information of the first terminal equipment.

In the solution provided in this embodiment of this application, the second network device may store the context information of the terminal equipment based on an indication of the first network device.

With reference to the third aspect, in some implementations of the third aspect, the context information of the first terminal equipment includes a user plane context of the first terminal equipment and/or a control plane context of the first terminal equipment.

In the solution provided in this embodiment of this application, the user plane context and/or the control plane context of the terminal equipment are/is retained, to meet different scenario requirements.

With reference to the third aspect, in some implementations of the third aspect, the first information further includes keep time for the context information of the first terminal equipment. The first message further indicates keep time for the context information of the first terminal equipment by the first network device, and when current time exceeds the keep time, the second network device deletes the context information of the first terminal equipment.

In the solution provided in this embodiment of this application, the second network device may obtain the keep time for the context information of the terminal equipment, and indicate, in the first message, the keep time for the context information of the terminal equipment by the first network device, so that the first network device can dynamically implement a suspend procedure, and delete the context information in a timely manner after expiration, thereby saving resources of the second network device and the first network device.

With reference to the third aspect, in some implementations of the third aspect, the first information further includes keep time for the context information of the first terminal equipment. When current time exceeds the keep time, the second network device deletes the context information of the first terminal equipment, and sends a third message to the first network device, where the third message indicates the first network device to delete the context information of the first terminal equipment.

In the solution provided in this embodiment of this application, after deleting the context information of the terminal equipment, the second network device indicates, by using the third message, the first network device to delete the context information of the terminal equipment, thereby further saving the resources of the first network device.

With reference to the third aspect, in some implementations of the third aspect, the second network device determines, based on at least one of sensing information and the ephemeris information, to send a fourth message to the first network device, where the fourth message indicates the first network device to perform resumption.

In the solution provided in this embodiment of this application, the second network device can trigger, based on the at least one of the sensing information and the ephemeris information, an indication for resuming the first network device, so that the second network device can deliver, to the first network device, downlink signaling or data for resuming the first terminal equipment.

With reference to the third aspect, in some implementations of the third aspect, the second network device determines, based on sensing information, to send a fourth message to the first network device, where when the second network device determines, based on the sensing information, to connect to the first network device, the second network device determines to send the fourth message to the first network device. Alternatively, the second network device determines, based on the ephemeris information, to send a fourth message to the first network device, where the second network device determines, based on the ephemeris information, a second moment at which the first network device is to leave the first area, and before the second moment, the second network device determines to send the fourth message to the first network device. Alternatively, the second network device determines, based on service information of the first terminal equipment, to send a fourth message to the first network device.

In the solution provided in this embodiment of this application, the second network device may have an underlying circuit sensing function. In this way, when determining, based on the sensing information, that the second network device is connected to the first network device, or learning, from another network device, information about an underlying link connection and disconnection, or when determining, based on the ephemeris information, that the first network device enters a communication range, the second network device may trigger a resume procedure.

The service information of the first terminal equipment may be downlink data (downlink data) information.

With reference to the third aspect, in some implementations of the third aspect, the fourth message includes a user plane context of the first terminal equipment and/or a control plane context of the first terminal equipment.

In the solution provided in this embodiment of this application, the fourth message includes a first identifier of the user plane context and/or the control plane context of the terminal equipment, so that a context of the suspended terminal equipment in different scenarios can be resumed.

According to a fourth aspect, a communication method is provided. The method may be performed by a terminal equipment, or may be performed by a component (for example, a chip or a circuit) of a terminal equipment. This is not limited. For ease of description, the following uses an example in which the method is performed by the terminal equipment for description. The method includes: A first terminal equipment monitors a first network device based on ephemeris information. After the first terminal equipment is connected to a first network device, the first terminal equipment sends a first message to the first network device. The first terminal equipment receives a second message from the first network device, and performs suspension based on the second message. The second message includes context information of the first terminal equipment, and the first network device maintains a connection to the first terminal equipment in a first area.

It should be understood that the first network device may be an access network device or another network device, for example, a core network device. The first network device may be a network device on-board.

After the first terminal equipment is connected to the first network device, the method includes: The terminal equipment resumes a terminal context with the first network device.

According to the solution provided in this embodiment of this application, the terminal equipment can monitor the first network device based on the ephemeris information, thereby avoiding invalid monitoring performed before the first network device enters the first area, and further saving resources.

With reference to the fourth aspect, in some implementations of the fourth aspect, the first terminal equipment determines, based on the ephemeris information, a first moment at which the first network device is to enter the first area, and after the first moment, the first terminal equipment monitors the first network device.

Optionally, the first terminal equipment determines, based on the ephemeris information, a time period in which the first network device is located in the first area, and in the time period, the first terminal equipment determines to monitor the first network device.

According to a fifth aspect, this application provides a communication apparatus, including a processor. The processor is configured to cause, by executing a computer program or instructions or via a processing circuit, the communication apparatus to perform the method according to any one of the first aspect and the possible implementations of the first aspect, or the communication apparatus to perform the method according to any one of the first aspect and the possible implementations of the second aspect.

In a possible implementation, the communication apparatus further includes a memory, configured to store the computer program or the instructions. Further, the processor is specifically configured to invoke and run the computer program or the computer instructions stored in the memory, to cause the processor to implement any one of the implementations of the first aspect or the second aspect.

In a possible implementation, the communication apparatus further includes a transceiver (which may also be referred to as a communication interface), and the transceiver is configured to input and/or output a signal through a communication interface. The processor is configured to control the transceiver to send and receive a signal.

According to a sixth aspect, this application provides a communication apparatus, including a processing circuit (which may also be referred to as a processor) and an input/output interface (which may also be referred to as an interface circuit). The input/output interface is configured to input and/or output a signal. The processing circuit is configured to perform the method according to any one of the first aspect and the possible implementations of the first aspect. Alternatively, the processing circuit is configured to perform the method according to any one of the second aspect and the possible implementations of the second aspect.

In a possible implementation, the processor is configured to communicate with another apparatus via the interface circuit, and perform any one of the implementations of the first aspect or any one of the implementations of the second aspect. There are one or more processors.

According to a seventh aspect, this application provides a communications apparatus. The communication apparatus may be a first network device, or may be a device or module configured to perform a function of a first network device. Alternatively, the communication apparatus may be a second network device, or may be a device or module configured to perform a function of a second network device.

In a possible implementation, the communication apparatus may include modules or units that are in a one-to-one correspondence with the methods/operations/steps/actions described in the first aspect. The modules or units may be implemented by a hardware circuit, software, or a combination of a hardware circuit and software.

In another possible implementation, the communication apparatus may include modules or units in one-to-one correspondence with the methods/operations/steps/actions described in the second aspect. The modules or units may be implemented by a hardware circuit, software, or a combination of a hardware circuit and software.

According to an eighth aspect, this application provides a computer-readable storage medium. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to a ninth aspect, this application provides a computer program product, including a computer program or instructions. When the computer program or the instructions are run on a computer, the method according to any one of the first aspect and the possible implementations of the first aspect is performed, or the method according to any one of the second aspect and the possible implementations of the second aspect is performed.

According to a tenth aspect, this application provides a communication apparatus, including a processor. The processor is configured to be connected to a memory, and configured to invoke a program stored in the memory, to perform the method according to any one of the possible implementations of the first aspect or the method according to any one of the possible implementations of the second aspect. The memory may be located inside or outside the communication apparatus. There are one or more processors.

In an implementation, the communication apparatus according to the fifth aspect, the sixth aspect, the seventh aspect, or the tenth aspect may be a chip or a chip system.

According to an eleventh aspect, this application provides a chip apparatus, including a processor, configured to invoke a computer program or computer instructions in a memory, to cause the processor to perform any one of the implementations of the first aspect or any one of the implementations of the second aspect.

Optionally, the processor is coupled to the memory through an interface.

According to a twelfth aspect, this application provides a communication system. The communication system includes a first network device and a second network device. The first network device is configured to perform the method shown in the first aspect, and the second network device is configured to perform the method shown in the second aspect.

For descriptions of beneficial effects of any one of the fifth aspect to the twelfth aspect, refer to the descriptions of the beneficial effects of the first aspect, the second aspect, the third aspect, or the fourth aspect.

### BRIEF DESCRIPTION OF DRAWINGS

FIG. 1 is a diagram of a communication system to which this application is applicable;
FIG. 2 is a diagram of another communication system to which this application is applicable;
FIG. 3 is a diagram of a network architecture of another communication system to which embodiments of this application are applicable;
FIG. 4 is a diagram of storage and forwarding according to an embodiment of this application;
FIG. 5A and FIG. 5B are a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of a communication method according to an embodiment of this application;
FIG. 10 is a schematic flowchart of another communication method according to an embodiment of this application;
FIG. 11 is a block diagram of an apparatus 1100 according to an embodiment of this application; and
FIG. 12 is a block diagram of an apparatus 1200 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5G system or a new radio (new radio, NR) system, a long-term evolution (long-term evolution, LTE) system, an LTE frequency division duplex (frequency division duplex, FDD) system, and an LTE time division duplex (time division duplex, TDD) system. The technical solutions provided in this application may also be applied to a future communication system, for example, a sixth-generation mobile communication system. The technical solutions in embodiments of this application may be further applied to a device-to-device (device-to-device, D2D) communication system, a vehicle-to-everything (vehicle-to-everything, V2X) communication system, a machine-to-machine (machine-to-machine, M2M) communication system, a machine-type communication (machine-type communication, MTC) system, an internet of things (internet of things, IoT) communication system, or another communication system.

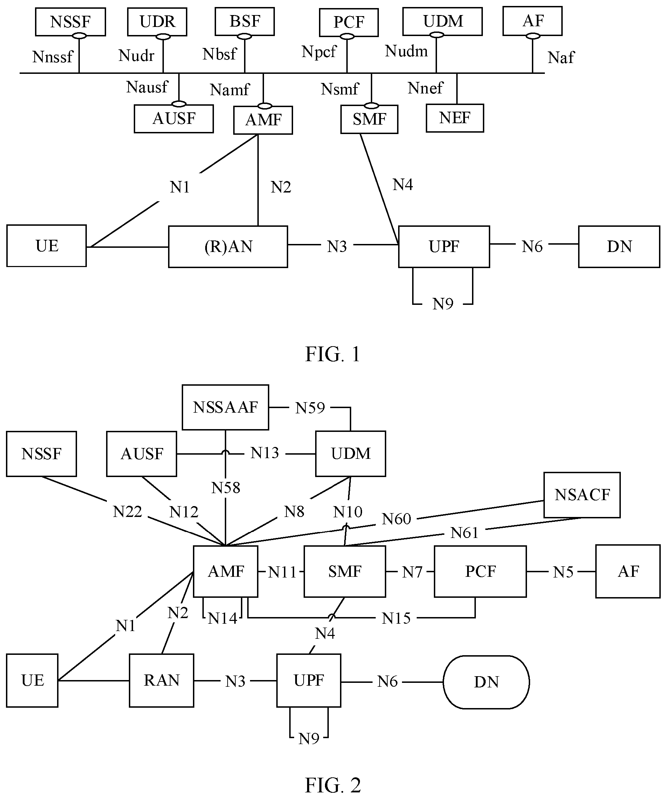

For ease of understanding of embodiments of this application, a communication system to which embodiments of this application are applicable is first briefly described with reference to FIG. 1 and FIG. 2.

As an example for description, FIG. 1 is a diagram of an architecture of a 5G system to which an embodiment of this application is applicable. FIG. 1 is a diagram of a 5G network architecture based on a service-oriented interface. As shown in FIG. 1, the network architecture may include but is not limited to the following network elements (or referred to as function network elements, function entities, nodes, devices, or the like):
a user equipment (user equipment, UE), a (radio) access network (radio access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, a data network (data network, DN), a network slice selection function (network slice selection function, NSSF), an authentication server function (authentication server function, AUSF), a network exposure function (network exposure function, NEF) network element, a binding support function (binding support function, BSF) network element, a unified data repository (unified data repository, UDR), and the like.

The following briefly describes the network elements shown in FIG. 1.
1. UE: The UE may be referred to as a terminal equipment, a terminal, an access terminal, a subscriber unit, a subscriber station, a mobile station, a mobile console, a remote station, a remote terminal, a mobile device, a user terminal, a wireless communication device, a user agent, or a user apparatus. The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal equipment in a 5G network, a terminal equipment in a future evolved public land mobile network (public land mobile network, PLMN) or a non-terrestrial network (non-terrestrial network, NTN), or the like. The UE may alternatively be an end device, a logical entity, or an intelligent device, for example, a terminal equipment like a mobile phone or an intelligent terminal, or a communication device like a server, a gateway, a base station, or a controller, or an internet of things (internet of things, IoT) device like an internet of things device, a passive internet of things device, a passive internet of things device, an active internet of things device, an active-passive internet of things device, a semi-active-passive internet of things device, a sensor, an electricity meter, or a water meter. The UE may alternatively be an uncrewed aerial vehicle (unmanned aerial vehicle or uncrewed aerial vehicle, UAV) having a communication function. When the terminal is a passive or semi-active terminal or a passive internet of things device, the terminal may obtain energy to receive or send data. Energy can be obtained by radio or obtained as solar energy, light energy, wind energy, water energy, heat energy, kinetic energy, and the like. A manner in which the passive or semi-active terminal obtains energy is not limited in this application. This is not limited in embodiments of this application. It should be noted that the passive internet of things device in this application may be in a form of passive internet of things device, or may be in any form of terminal. This is not limited in embodiments of this application.

As an example rather than a limitation, in embodiments of this application, the wearable device may also be referred to as a wearable intelligent device, and is a general name of a wearable device developed by intelligently designing daily wear through a wearable technology, for example, glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the user equipment in embodiments of this application may alternatively be a user equipment in an Internet of Things (Internet of Things, IoT) system. IoT is an important part of development of future information technologies. A main technical feature of the IoT is to connect an object to a network by using a communication technology, to implement an intelligent network of human-machine interconnection and thing-thing interconnection. In embodiments of this application, an IoT technology may implement massive connections, deep coverage, and terminal power saving by using, for example, a narrowband (narrow band, NB) technology.

In addition, in embodiments of this application, the user equipment may further include the sensor. Main functions of the sensor include collecting data (for some user equipments), receiving control information and downlink data of a first network device, sending an electromagnetic wave, and transmitting uplink data to the first network device.

In embodiments of this application, the apparatus configured to implement a function of the user equipment may be the user equipment, or may be an apparatus that can support the user equipment in implementing the function, for example, a chip system or a combined component or component that can implement a function of the user equipment. The apparatus may be installed in the user equipment.

In embodiments of this application, the chip system may include a chip, or may include a chip and another discrete component. In the technical solutions provided in embodiments of this application, the technical solutions provided in embodiments of this application are described by using an example in which the apparatus configured to implement the function of the user equipment is the user equipment.

2. (R)AN: The (R)AN is used to provide a network access function for an authorized user equipment in a specific area, and can use transmission tunnels of different quality of service based on a level of the user equipment, a service requirement, and the like.

The (R)AN can manage radio resources and provide access service for a user equipment, thereby forwarding a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system like an NR system, or one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It can be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. UPF network element: The UPF network element is a type of core network device. The device can be responsible for forwarding and receiving user data in the user equipment. The UPF network element may receive user data from a data network, and transmit the user data to the user equipment through the access network element. The user plane function network element may further receive user data from the user equipment through the access network element, and forward the user data to the data network. A transmission resource and a scheduling function that are used by the user plane function network element to provide a service for the user equipment are managed and controlled by the session management function network element. The UPF network element mainly includes the following user plane-related functions: data packet routing and transmission, data packet detection, service usage reporting, quality of service (quality of service, QoS) processing, lawful interception, uplink data packet detection, downlink data packet storage, and the like.

In the 5G communication system, the user plane network element may be a UPF network element. In a future communication system, the user plane network element may still be the UPF network element, or may have another name. This is not limited in this application.

4. DN: The DN is a network for data transmission.

In a 5G communication system, the data network element may be a DN network element. In a future communication system, the data network element may still be the DN network element, or may have another name. This is not limited in this application.

5. AMF network element: The AMF network element (which may also be referred to as an access and mobility management device, an access and mobility management function entity, an access and mobility management function network element, a mobility management device, a mobility management network element, or a mobility management entity) is a type of core network device. The device may be configured for access control and mobility management of the user equipment. During actual application, the device includes a mobility management function of a mobility management entity (mobility management entity, MME) in a long-term evolution (long-term evolution, LTE) network architecture, and adds an access management function. The device may be specifically responsible for registration of the user equipment, mobility management, a tracking area update procedure, reachability detection, selection of a session management function network element, mobility state transition management, and the like. For example, in 5G, the access and mobility management network element may be an access and mobility management function network element. In future communication, for example, in a future communication network, the access and mobility management network element may still be an AMF network element or have another name. This is not limited in this application. When the access and mobility management network element is an AMF network element, the AMF may provide a Namf service.

6. SMF: The SMF is a type of core network device. The device may be configured to be responsible for user equipment session management (including session setup, modification, and release), selection and reselection of a user plane function network element, user equipment internet protocol (internet protocol, IP) address allocation, quality of service (quality of service, QoS) control, and the like. For example, in 5G, the session management network element may be a session management function (session management function, SMF) network element. In a future communication system, for example, in a future communications network, the session management network element may still be an SMF network element, or may have another name. This is not limited in this application. When the session management network element is an SMF network element, the SMF may provide a Nsmf service.

In a 5G communication system, the session management network element may be an SMF network element. In a future communication system, the session management network element may still be the SMF network element, or may have another name. This is not limited in this application.

7. PCF: It is a unified policy framework for guiding network behavior, and provides policy or rule information for a control plane function network element (for example, the AMF or SMF network element), and the like.

8. UDM (which may also be referred to as a unified data management device, a unified data management network element, a data management device, or a unified data management entity): The UDM may be understood as a name of a unified data management network element in a 5G architecture. The unified data management network element mainly includes the following functions: unified data management, authentication credential processing in a mechanism supporting 3GPP authentication and key agreement, user identity processing, access authorization, registration and mobility management, subscription management, short message management, and the like. The unified data management network element is configured for terminal equipment identification handling, access authentication, registration, mobility management, and the like. In a 5G communication system, the unified data management may be a UDM or a unified data management device. In a future communication system, the unified data management may still be a UDM network element, or may have another name. This is not limited in embodiments of this application. The unified data management device may be a core network device. The unified data management device may be a control plane device.

9. AF: The AF is used to provide application layer information, and can interact with a policy framework through a network exposure function network element or directly to request for policy decision-making, and the like.

10. NSSF: The NSSF mainly includes the following functions: selecting a set of network slice instances for a UE, determining allowed network slice selection assistance information (network slice selection assistance information, NSSAI), determining an AMF set that can serve the UE, and the like.

11. AUSF: The AUSF mainly includes the following functions: an authentication server function interacting with a unified data management network element to obtain user information, and performing an authentication-related function, for example, generating an intermediate key.

12. BSF: The BSF implements session binding. Specifically, the BSF is used by the AF to address the PCF.

When the SMF requests policy control from the PCF for a session that the UE requests to set up, the SMF provides information such as a UE identifier and a user IP address for the PCF. The PCF registers binding information (including but not limited to the UE identifier, the user IP address, and a selected PCF identifier) with the BSF. Then, when the UE accesses a service on the AF by using the session, the AF may need to request policy authorization from the PCF for the service accessed by the UE. A PCF selected by the AF for the policy authorization needs to be the consistent with a PCF selected by the SMF for the session. This is because the policy authorization generally triggers the PCF to adjust policy control for an associated session of the SMF. The AF may query the BSF for a corresponding PCF based on the user IP address or the UE identifier, and then directly request policy authorization from the AF through an N5 interface defined by 5G.

13. UDR (which may also be referred to as a user database device, a user database entity, or a user database network element): The UDR may be understood as a name of a unified data storage network element in the 5G architecture. The user database is mainly used for storage and retrieval functions of data types such as subscription data, policy data, and application data.

It can be understood that the foregoing network elements or function network elements may be network elements in a hardware device, software functions running on dedicated hardware, or virtualization functions instantiated on a platform (for example, a cloud platform).

14. NEF: The NEF may be understood as a name of a capability exposure network element in a 5G architecture. The capability exposure network element mainly includes the following functions: securely opening a service and a capability that are provided by a 3GPP network function, such as internally opening or opening to a third party; and transforming or translating information exchanged with the AF and information exchanged with an internal network function, for example, an AF service identifier and internal 5G core network information such as a data network name (data network name, DNN), and single network slice selection assistance information (single network slice selection assistance information, S-NSSAI).

It can be learned from FIG. 1 that interfaces between control plane network elements in FIG. 1 are service-oriented interfaces.

In the architecture shown in FIG. 1, names and functions of interfaces between network elements are as follows:
(1) N1: The N1 is an interface between an AMF and a terminal, for transferring QoS control rules or the like to the terminal.
(2) N2: The N2 is an interface between the AMF and a RAN, for transferring radio bearer control information or the like from a core network side to the RAN.
(3) N3: The N3 is an interface between the RAN and a UPF, for transferring uplink and downlink user plane data between the RAN and UPF.
(4) N4: The N4 is an interface between an SMF and the UPF, for transferring information between a control plane and a user plane, including delivering forwarding rules, QoS control rules, traffic statistics rules, or the like from the control plane to the user plane, and reporting user plane information.
(5) N9: The N9 is a user plane interface between UPFs, and is used to transfer uplink and downlink user data flows between the UPFs.
(6) Service-oriented interfaces Nnssf, Nudr, Nausf, Nbsf, Namf, Npcf, Nsmf, Nudm, Nnef, and Naf are respectively service-oriented interfaces provided by the NSSF, the UDR, the AUSF, the BSF, the AMF, the PCF, the SMF, the UDM, the NEF, and the AF for invoking corresponding service-oriented operations.
(7) N6: The N6 is an interface between the UPF and the DN, and is used to transfer uplink and downlink user data flows between the UPF and the DN.

N1, N2, N3, N4, and N6 are interface sequence numbers. For meanings of these interface sequence numbers, refer to meanings defined in the 3rd generation partnership project (3rd generation partnership project, 3GPP) standard protocol. This is not limited herein.

In addition, an interface between the access network and the core network may also be referred to as an NG (next generation) interface. The core network device and the access network device may communicate with each other through the NG interface. Transmission between the UE and the base station is performed over a Uu interface, that is, over an air interface.

It should be noted that the interfaces between the control plane network elements may alternatively be point-to-point interfaces. Details are not described herein.

It should be understood that the AMF, the SMF, the UPF, the PCF, the UDM, and the like shown in FIG. 1 may be understood as network elements configured to implement different functions, for example, may be combined as needed to form a network slice. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that another name is used in the 5G network and another future network. For example, in the future communication network, some or all of the foregoing network elements may still use terms in 5G, or may use other names.

It should be further understood that names of the interfaces between the network elements in FIG. 1 are merely examples, and the interfaces may have other names in a specific implementation. This is not specifically limited in this application. In addition, a name of information (or signaling) transmitted between the foregoing network elements is merely an example, and does not constitute any limitation on a function of the information.

It should be understood that the network architecture to which embodiments of this application are applicable is merely an example for description, and the network architecture to which embodiments of this application are applicable is not limited thereto. Embodiments of this application are applied to any network architecture that can implement functions of the foregoing network elements, for example, a 4G or future communication network.

FIG. 2 is a diagram of an architecture based on a reference point. For related descriptions, refer to a 5G system architecture (5G system architecture) in a standard. For brevity, the connection relationship in FIG. 2 is not described herein.

To facilitate understanding of the technical solutions in embodiments of this application, before the solutions in embodiments of this application are described, some terms or concepts that may be used in embodiments of this application are first briefly described.

In the standard protocols of R15 to R18, the 3rd generation partnership project (3rd generation partnership project, 3GPP) defines a series of architecture systems and features for satellites. A communication architecture in which a satellite serves as an access network device is mainly applied to a remote area. A cellular network may not cover the remote area. Therefore, the satellite serves as the access network device to assist a terminal equipment in communication. In some other scenarios, real-time data transmission may be implemented by using a low-latency feature of a low-orbit satellite.

A moving trajectory of a satellite may be predetermined. For example, the moving trajectory of the satellite is represented by using ephemeris information (ephemeris) of the satellite or other information indicating satellite coverage. The ephemeris information or other information indicating satellite coverage may include information such as an altitude of a running orbit, an included angle between the running orbit and an equatorial plane, and a running speed. A spatial orientation of the satellite at specific time may be known based on the ephemeris information of the satellite.

### 1. Satellite type

Satellites may be classified into geostationary equatorial orbit (geostationary equatorial orbit, GEO) satellites, non-geostationary equatorial orbit satellites, and other satellites (Other SATs) based on altitudes of satellite orbits.

An altitude of the geostationary equatorial orbit satellite is about 35786 KM. The advantage is that a coverage range is large and a satellite movement rate is consistent with that of the earth. Therefore, the signal coverage range does not move over time. The disadvantage is that a communication delay is high due to the high altitude.

An altitude of the non-geostationary equatorial orbit satellite approximately ranges from 500 KM to 45000 KM. The non-geostationary equatorial orbit satellite may be further classified into a low earth orbit (low earth orbit, LEO) satellite, a medium earth orbit (medium earth orbit, MEO) satellite, and a high earth orbit (high earth orbit, HEO) satellite. The disadvantage of the high earth orbit non-geostationary equatorial orbit satellite is that a coverage range moves over time and a communication delay is high, and therefore the high earth orbit non-geostationary equatorial orbit satellite is not suitable for communication. The advantage of the medium earth orbit non-geostationary equatorial orbit satellite and the low earth orbit non-geostationary equatorial orbit satellite is that delays of the satellites are lower than that of the geostationary equatorial orbit satellite, and the disadvantage is that coverage ranges are smaller than that of the geostationary equatorial orbit satellite, and the coverage ranges move over time.

Although movement of the medium earth orbit non-geostationary equatorial orbit satellite and low earth orbit non-geostationary equatorial orbit satellite brings management complexity, the signal delays thereof are lower, and many satellite communication providers choose the medium earth orbit non-geostationary equatorial orbit satellite and/or the low earth orbit non-geostationary equatorial orbit satellite as communication satellites.

For example, by default, the satellite mentioned in embodiments of this application is a medium earth orbit non-geostationary equatorial orbit satellite and/or a low earth orbit non-geostationary equatorial orbit satellite, or another satellite with a low signal delay.

### 2. Satellite constellation

The satellite constellation is a set of satellites that are launched into an orbit and can normally work. Usually, the satellite constellation is a satellite network including some satellites configured in a manner. Main communication satellite constellations include an iridium satellite system, a European data relay system (European Data Relay System, EDRS), Tianlian I, StarLink (StarLink), OneWeb (OneWeb), a navigation-related global positioning system (global positioning system, GPS) satellite constellation, a GLONASS (GLONASS) satellite constellation, a Galileo satellite constellation, and a BeiDou satellite constellation, and the like.

### 3. Access to a network through a satellite

In this application, the UE may access a network through a satellite. When the UE accesses a RAN disposed on the satellite, the UE needs to be within a service area of the satellite (or the UE is located within a coverage area of the satellite).

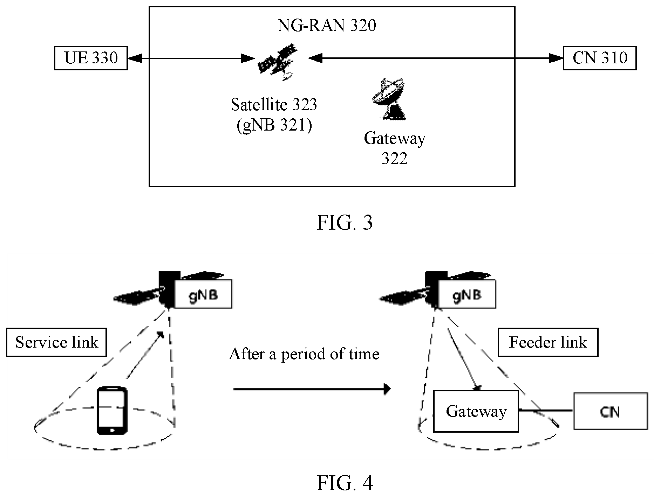

FIG. 3 is a diagram of a network architecture of another communication system to which embodiments of this application are applicable.

As shown in FIG. 3, a UE 330 accesses a CN 310 through a next generation radio access network (next generation radio access network, NG-RAN) 320. The NG-RAN 320 includes a gNB 321, a gateway (gateway) 322, and a satellite 323. The satellite 323 is configured to connect the UE 330 to the CN 310, and is further configured to process data. In the NG-RAN 320, the satellite 323 has a function of a base station (for example, the gNB 321). FIG. 3 may also be considered as a gNB on board (gNB on board) solution and the UE 330 is connected to the CN 310 through the satellite base station and the gateway 322. The satellite 323 in FIG. 3 may be referred to as a regenerative satellite (regenerative satellite).

It should be noted that the gNB in FIG. 3 may be replaced with an eNB. Embodiments of this application may be applied to a 5G network, a 4G network, and another communication system.

### 4. Connection management status

A signaling connection status between the UE and the core network may be referred to as a connection management status. Specifically, the connection management status includes a connected state and an idle state.

When the UE is in the idle state, a connection between the UE and the core network (for example, a non-access stratum (non-access stratum, NAS) signaling connection or a NAS connection, which may also be referred to as an N1 connection in the 5G system), a connection between the UE and the access network (for example, an access network (access network, AN) signaling connection or an AN connection), a connection between the access network and a core network control plane network element (for example, the connection may be referred to as an N2 connection in the 5G system), and a connection between the access network and a core network user plane network element (for example, the connection may be referred to as an N3 connection in the 5G system) do not exist.

When the UE is in the idle state, if the AN connection is set up, a status of the UE is switched from the idle state to the connected state. Alternatively, when the UE is in the connected state, if the AN connection is released, a status of the UE is switched from the connected state to the idle state.

An RRC inactive connection state is a special connection state. For ease of description, the RRC inactive connection state is referred to as an RRC inactive state for short below. Specifically, RRC supports three states, namely, an RRC idle (RRC_IDLE) state, an RRC inactive (RRC_INACTIVE) state, and an RRC connected (RRC_CONNECTED) state. An RRC status is a connection status between the UE and the RAN. When the signaling connection status between the UE and the core network is the connected state, the RRC status may be the RRC inactive state or the RRC connected state.

When the UE is in the RRC inactive state, both the UE and the RAN retain an access stratum (access stratum, AS) context. Therefore, compared with restoration from the RRC idle state to the RRC connected state, the UE restores faster from the RRC inactive state to the RRC connected state. In addition, the UE in the RRC inactive state can maintain a power consumption level close to that in the RRC idle state.

### 5. Narrow band internet of things (Narrow Band Internet of Things, NB-IoT)

The NB-IoT is an emerging technology in the IoT field, supports a cellular data connection in a wide area network for a low-power consumption device, and is also referred to as a low-power wide area network. The NB-IoT supports an efficient connection of a device with long standby time and a high requirement for a network connection.

### 6. Suspend (suspend)

Suspend may be understood as that an initiator and a responder of a suspend procedure store context information of the terminal equipment. Storing (storing) the context information may be understood as keeping (keeping) the context information.

For example, a state in which both the UE and the RAN keep the context of the UE after the AN connection is released may be collectively referred to as a suspend state.

### 7. UE resume (resume)

The UE and the access network may quickly resume a connection by using information stored during suspending, and enter the connected state. Compared with a common connection resume procedure in the idle state, the quick connection resume procedure can reduce signaling interaction and save energy.

For example, resuming a first terminal equipment may be understood as resuming a context of the first terminal equipment, and the first network device and the first terminal equipment may communicate with each other by using the context of the first terminal equipment.

### 8. Ephemeris information and satellite coverage information

The ephemeris information of the satellite or other information indicating satellite coverage includes parameters such as an orbital parameter or an azimuth of the satellite that is obtained through calculation based on the orbital parameter. It can be understood that the ephemeris information of the satellite may be used to calculate, predict, describe, or track a flight status of the satellite, such as time, a location, and a speed.

### 9. Discontinuous coverage scenario

In a non-terrestrial communication (non-terrestrial network, NTN) system, a satellite can communicate with a core network device via a gateway (NTN gateway), and the satellite may further communicate with a terminal equipment. The satellite may serve as an access network device, a link between the gateway and the satellite is a feeder link (feeder link), and a link between the satellite and the terminal equipment is a service link (service link). When the satellite is connected to a terminal equipment, that is, when the satellite is in a service link, the satellite is not connected to the gateway, that is, the satellite is not connected to the core network. Similarly, when the satellite is connected to the gateway, that is, when the satellite is in a feeder link, the satellite is not connected to the terminal equipment.

FIG. 4 is a diagram of storage and forwarding. As shown in FIG. 4, a satellite may store data received from a terminal equipment, and deliver the information to a gateway when a feeder link is resumed, and vice versa.

In this embodiment of this application, when the satellite is connected through a feeder link, it can be understood that the satellite is directly connected through a feeder link, or the satellite is indirectly connected through a feeder link after being connected through an inter-satellite link, and vice versa. When the satellite is not connected through a feeder link, it can be understood that the satellite is not connected to the gateway through a feeder link, or the satellite is not indirectly connected through a feeder link after being connected through an inter-satellite link.

A service link of the satellite is similar to the foregoing feeder link, and details are not described herein again.

Due to reasons such as movement of the satellite, the UE or the gateway may be out of a connection range of the satellite for a period of time.

In this application, the "satellite connection range" may be replaced with a word that has a same meaning like "satellite service range", "satellite coverage range", "network coverage", "coverage range", "coverage", or the like.

For example, in an initial phase of satellite deployment, satellites are sparse, and satellites on a satellite constellation cannot completely cover the surface of the earth. As a satellite moves, the UE or the gateway may fail to connect to the satellite for a period of time, until a next satellite moves to cover the UE or the gateway, or the satellite moves to cover the UE or the gateway again.

For another example, a satellite deployed in space may be temporarily unavailable due to software update, may be unavailable for a long period of time due to a fault, or may be permanently unavailable due to a need for recycling. As a result, the UE or the gateway cannot be connected to the satellite within a period of time.

In this embodiment of this application, a scenario in which the UE or the gateway is not within the connection range of the satellite for a period of time is referred to as a discontinuous coverage scenario.

It can be learned from the foregoing that, when the satellite is connected to the gateway, due to relative movement between the satellite and the gateway, once the satellite moves out of a communication range of the gateway, an underlying connection to the core network is disconnected, and an upper-layer communication connection is disconnected. As a result, contexts in access networks and core networks may be deleted, and the connections cannot be quickly resumed again by using the contexts. In addition, a reconnection process triggered by the disconnection between the satellite and the core network cannot be normally performed because the satellite is far away from the gateway.

In view of this, this application provides a communication method and apparatus.

For ease of description, the following uses an example in which the first terminal equipment is a UE, the first network device is a RAN, and the second network device is an AMF for description. It should be understood that a quantity of terminal equipments is not limited in embodiments of this application. The following uses one of the terminal equipments as an example for description.

It should be noted that a name of a network device is not limited in this application.

For example, the second network device may be an AMF, or another network element that can implement an access and mobility management function.

It should be understood that, in this embodiment of this application, because the satellite continuously moves, when the satellite leaves a communication range in which the satellite can be connected to the gateway or the terminal equipment, a context of the terminal equipment needs to be suspended, so as to avoid sudden disconnection of a communication connection when the satellite leaves a communication range.

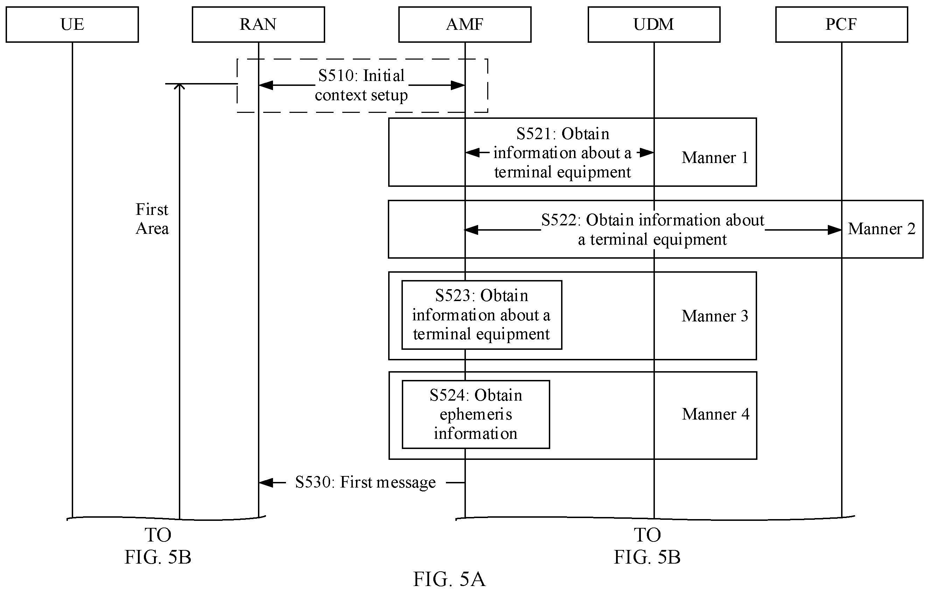

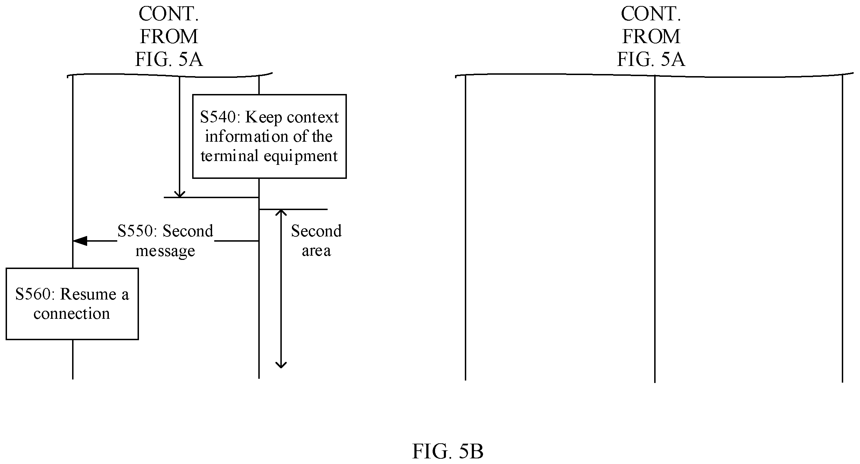

FIG. 5A and FIG. 5B are a schematic flowchart of a communication method according to this application. A method 500 may be applied to the network architecture shown in FIG. 1 or FIG. 2. The following describes an embodiment of the method 500 with reference to FIG. 5A and FIG. 5B.

S510: An AMF sends an initial context setup request (initial context setup request) message to a RAN.

It should be understood that, when a UE accesses the AMF for the first time, if the AMF allows the UE to access, the AMF sends the initial context setup request message to the RAN, to request the RAN to set up an initial context of the UE. The RAN may cover a first area, and the RAN maintains a connection to the AMF in the first area. It can be understood that a current coverage area of the RAN is the first area.

In this way, through initial context setup, the AMF and the RAN may determine information such as a NGAP identifier and a security context of the UE.

Further, it can be learned from step S510 that the AMF has set up a connection to the RAN. For ease of understanding, the following describes, in combination with subsequent steps in FIG. 5A and FIG. 5B, how the AMF triggers suspending of the UE.

It should be understood that S510 may be a preset step of S520. After S510, the RAN and the AMF may further perform another procedure, for example, a registration procedure.

In this embodiment of this application, the method 500 further includes the following steps.

S520: The AMF obtains first information.

It should be understood that the first information may be obtained by the AMF through receiving, storing, or preconfiguration. The first information may include information about a terminal equipment and/or ephemeris information.

Optionally, the first information may further include satellite coverage information, gateway location information, and the like.

Specifically, S520 may include four manners: S521, S522, S523, and S524.

### Manner 1

S521: The AMF obtains the information about the terminal equipment from a data management network element like a unified data management (unified data management, UDM) network element.

The information about the terminal equipment may be configuration information of the terminal equipment, for example, subscription information. It can be understood that the UDM may perform subscription management on the UE. There may be a plurality of AMFs. Therefore, the UDM can be used to centrally manage storage space information.

The subscription information may indicate that the terminal equipment has subscribed to a store and forward (store and forward, S&F) service, or indicate that an S&F operation needs to be performed on the terminal equipment, or indicate that the terminal equipment can respond to an S&F service.

For another example, the configuration information may include a radio access type (radio access type, RAT) of the terminal equipment, the configuration information may include an S&F RAT, and the S&F RAT indicates that the S&F operation needs to be performed on the terminal equipment. This application does not limit the configuration information of the terminal equipment to including only the subscription information or the RAT. The configuration information of the terminal equipment may alternatively be other information. For example, the configuration information may include information provided by the terminal equipment when the terminal equipment accesses a network (for example, information in a registration procedure, or information that is exchanged with the access network device last time).

### Manner 2

S522: The AMF obtains the information about the terminal equipment, for example, identification information of the UE, from a policy management network element like a policy control function (policy control function, PCF) network element.

In an example, when the AMF obtains the information about the terminal equipment and determines that the terminal equipment can respond to an S&F service, the AMF may determine to perform the next step S530.

### Manner 3

S523: The AMF reads stored information about the terminal equipment, for example, context information of the terminal equipment.

It should be understood that the context information of the terminal equipment may indicate that an S&F operation needs to be performed on the terminal equipment, or may indicate that the terminal equipment can respond to an S&F service.

In an example, when the AMF determines, based on the context information of the terminal equipment, that the terminal equipment can respond to an S&F service, the AMF may determine to perform the next step S530.

### Manner 4

S524: The AMF obtains the ephemeris information.

Specifically, when the AMF determines, based on the ephemeris information, that the RAN can leave the first area, the AMF may determine to perform the next step S530.

For example, the AMF determines, based on the ephemeris information, that the RAN is to leave the first area at a first moment, and the AMF determines to perform the next step S530.

Optionally, the AMF determines, based on at least one of the ephemeris information, the satellite coverage information, and the gateway location information, to perform the next step S530.

Further, after determining that the terminal equipment can respond to the S&F service or that the RAN can leave the first area, the AMF may perform a UE suspend procedure, or the AMF may determine a first message of the UE. The first message includes a first identifier, the first identifier indicates the context information of the terminal equipment, and the first message indicates the RAN to store the context information of the terminal equipment.

In some embodiments, when determining that the terminal equipment performs the S&F operation during the previous interaction with the RAN, the AMF performs the next step S530.

In some embodiments, the AMF determines, based on service information of the terminal equipment, to send a fourth message to the RAN.

The service information of the terminal equipment may be downlink data (downlink data) information or other signaling information.

Specifically, when the AMF has service information of the terminal equipment that needs to be delivered, the AMF performs the next step S530.

It should be understood that the foregoing manners of triggering step S530 may be used in combination.

For example, when the AMF has service information of the terminal equipment that needs to be delivered, the AMF obtains the ephemeris information, and when the AMF determines, based on the ephemeris information, that the RAN is to leave the first area at the first moment, the AMF determines to perform the next step S530.

The method procedure shown in FIG. 5A and FIG. 5B may further include the following steps.

S530: The AMF sends the first message to the RAN, or the RAN receives the first message from the AMF.

The first message indicates the RAN to suspend the terminal equipment, the first message includes the first identifier, the first identifier indicates the context information of the terminal equipment, and the first message indicates the RAN to store the context information of the terminal equipment. In other words, the first message indicates the RAN to suspend the terminal equipment when the RAN is connected to the terminal equipment.

It can be understood that, when the AMF sends the first message to the RAN, the RAN is located in the first area, and the RAN can maintain a connection to the AMF in the first area. In other words, in this case, a first network device on-board is connected to a ground gateway.

The terminal equipment may be located in a second area, and the first area is different from the second area. This may be specifically replaced with the following: The terminal equipment is located outside the first area, or the terminal equipment is located outside a current coverage area of the RAN (for example, outside a signal coverage area or a beam coverage area).

It can be understood that, if the AMF indicates, through the RAN, the terminal equipment to suspend, at least one RAN may communicate with the UE. The RAN may be any one of the at least one RAN. This is not limited in this application. For example, there is an inter-satellite link (inter-satellite link, ISL) between a RAN #1, a RAN #2, and a RAN #3.

When the RAN is in the first area and maintains a connection to the AMF, that is, the RAN is in a feeder connection to the AMF, there is an intersection between the current coverage area of the RAN and the first area. In this case, the RAN may communicate with the AMF. That there is a feeder link connection between the RAN and the AMF may be understood as that there is a direct feeder link connection between the AMF and the RAN, or that there is a feeder link connection between the RAN and the AMF after the RAN is connected through an inter-satellite link. Similarly, a service link connection between the RAN and the UE may be understood as a direct service link connection between the RAN and the terminal equipment, or a service link connection between the RAN and the UE after the RAN is connected through an inter-satellite link.

It should be noted that the RAN may be used as a gNB on-board (gNB on-board), that is, the RAN is located on a satellite, and the RAN moves or flies based on a predetermined trajectory, to cover different areas. For example, when the RAN receives the first message from the AMF, the RAN is located in the first area. Alternatively, when the AMF is in the current coverage area of the RAN, the AMF sends the first message to the RAN. It can be understood that, as the RAN moves or flies, a location of the RAN also changes. The RAN is not fixed in one area, and may further move to another area. For example, when the RAN moves or flies to another location, the RAN may enter the second area, that is, an area in which the RAN can be connected to the terminal equipment.

That the first area is different from the second area may be understood as that the first area and the second area are different areas (for example, TAs, cells, or geographical areas), for example, the first area is a TA #1, the second area is a TA #2, and the TA #1 and the TA #2 are different; or may be understood as that there is no intersection between the first area and the second area, for example, the first area is a TA #1, the second area is a cell #1, and there is no intersection between the TA #1 and the cell #1.

Specifically, the first area may be a TA, or may be another area (for example, a cell or a geographical area). The second area may be a TA, or may be another area (for example, a cell or a geographical area). In an NTN scenario, the TA may also be referred to as an NTN TA. For an embodiment in which the first area and/or the second area are/is other areas/another area, refer to the following descriptions. Details are not described herein.

It should be noted that this embodiment of this application may be applied to a discontinuous feeding scenario. Specifically, in the discontinuous feeding scenario, when a feeder link between the RAN and the gateway of the AMF is not disconnected (or remains connected), a service link between the RAN and the UE is disconnected; or when a service link between the RAN and the UE is not disconnected, a feeder link between the RAN and the gateway of the AMF is disconnected (which may be understood as that communication cannot be performed). The discontinuous feeding scenario is a concept relative to a continuous feeding scenario. In the continuous feeding scenario, the RAN may be connected through both the feeder link and the service link.

For example, when the RAN is in the first area, the RAN can set up a feeder link with the gateway of the AMF. When the RAN is in the second area, the RAN can set up a service link with the UE. It can be understood that, when the RAN is in the first area (or connected through the feeder link, or connected to the AMF), the RAN is not in the second area (or not connected through the service link, or not connected to the UE); or when the RAN is in the second area (or connected through the service link, or connected to the UE), the RAN is not in the first area (or not connected through the feeder link, or not connected to the AMF).

In some embodiments, the first message may be carried in an N2 message. In other words, the N2 message may carry the first message, or the N2 message is used as the first message.

Optionally, the first message includes resume indication (resume indication) information, and the resume indication information indicates that the RAN stores the context information of the terminal equipment.

Optionally, the first message may be carried in a UE context suspend response (context suspend response).

In some embodiments, the context information of the terminal equipment includes a user plane context of the terminal equipment and/or a control plane context of the terminal equipment.

The first identifier may be used to index the context information of the terminal equipment.

It should be understood that context information of the first terminal indicated by the first identifier, for example, an NG interface context, is stored in the AMF and the RAN.

It should be understood that the first identifier may be located in the context of the terminal equipment, or may be an independent information element. The first identifier may be a temporary identifier between the AMF and the RAN, a UE session identifier, a job identifier, or the like. This is not limited in this application. The first identifier may be at least one of an NGAP identifier, a terminal equipment identifier (terminal equipment identifier, TE ID), a PDU session ID, a first network device identifier, an IP address of the third network device (for example, a UPF, an S-GW, or a P-GW), and the like in the conventional technology.

For example, the first identifier is a terminal equipment identifier (terminal equipment identifier, TE ID).

In some embodiments, the first identifier may be a new information element.

For example, the first identifier is a resume identifier (resume ID), and the resume identifier may be used to resume a related configuration of the terminal equipment.

The resume identifier may be uniquely allocated by the AMF to the UE.

Table 1 shows an implementation of the first message. Table 1 is merely an example, and does not constitute a limitation on this application.

**Table 1**

| | | |
|---|---|---|
| | AMF ID | GUAMI |
| Resume ID | UE NGAP ID | RAN UE NGAP ID |
| | | AMF UE NGAP ID |
| | Slice information | S-NSSAI |

A next generation application protocol identifier (next generation application protocol, NGAP ID) of the UE is a unique identifier of the UE in the 5G core network, and is used to identify and track a communication session of the UE. Single network slice selection assistance information (single network slice selection assistance information, S-NSSAI) is an information element used to select a network slice, and is used to describe a feature and an identifier of the network slice. It should be understood that the first message may further include another identifier, for example, a protocol data unit session identifier (PDU session ID). For a specific meaning thereof, refer to the existing descriptions. Details are not described herein again.

Optionally, the AMF may confirm a capability of the RAN, and the AMF sends the first message to the RAN when the RAN can respond to the S&F service.

In some embodiments, the AMF determines, based on the ephemeris information of the RAN, the first moment at which the RAN is to leave the first area. Before the first moment, the AMF determines, based on the information about the terminal equipment, to send the first message to the RAN.

Ephemeris (ephemeris) information of a satellite may represent a moving trajectory of the satellite. The ephemeris information may include information such as an altitude of a running orbit, an included angle between the running orbit and an equator plane, and a running speed. A spatial orientation of the satellite at specific time may be known based on the ephemeris information of the satellite.

For example, the AMF determines, based on the ephemeris information, time in which the AMF can communicate with the satellite, that is, time in which the satellite is in the first area. Before the first moment, the AMF determines to send the first message to the RAN.

Optionally, a core network device determines, based on the ephemeris information, a time period in which the access network device is located in the first area, and in the time period, the core network device determines to send the first message to the access network device.

Optionally, the AMF may determine, based on other parameter information, the moment at which the RAN is to leave the first area. This is not limited in this application.

S540: The RAN keeps the context information of the terminal equipment.

It should be understood that, in a process of performing steps S520 to S540, the RAN is located in the first area. In other words, the RAN can maintain a connection to the AMF. In this way, because the AMF can trigger suspending when the AMF can communicate with the RAN, and the RAN can keep the context information of the terminal equipment, when the RAN leaves the first area and an underlying connection to the AMF is disconnected, deletion of contexts in the RAN and the AMF can be avoided.

S550: The RAN sends a second message to the UE, or the UE receives a second message from the RAN.

The second message is used to resume the terminal equipment, the second message includes a second identifier, and the second identifier indicates to resume the context information of the terminal equipment.

It should be understood that resuming the context information of the first terminal equipment may be understood as resuming the first terminal equipment, that is, resuming a context of the first terminal equipment. The first network device and the first terminal equipment may communicate with each other by using the context of the first terminal equipment.

It should be understood that the context information of the first terminal indicated by the second identifier, for example, a Uu interface context, may be stored in the first terminal equipment and the first network device.

S560: The UE resumes the connection to the RAN.

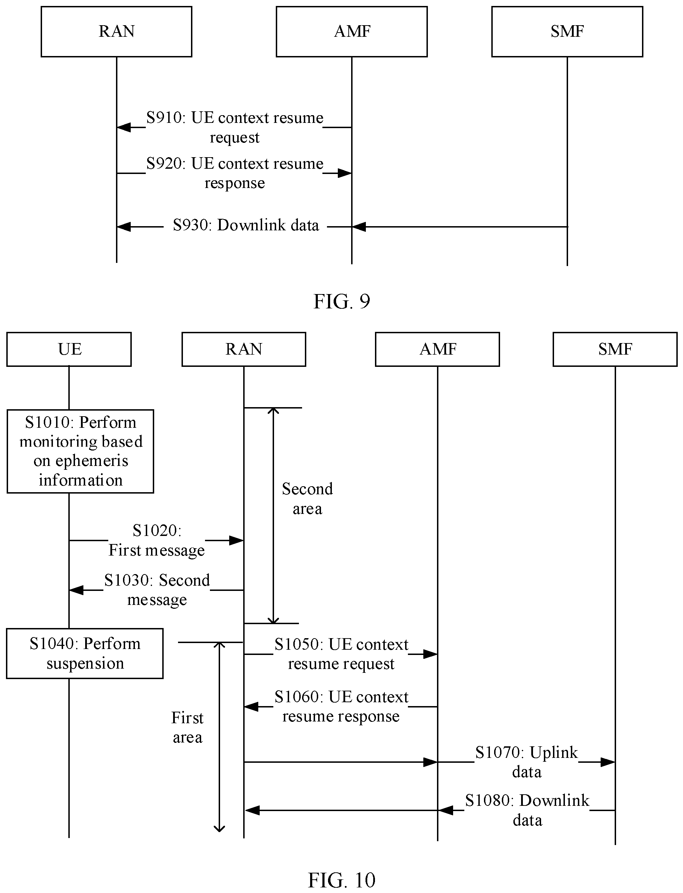

It should be understood that, in a process of performing steps S550 and S560, the RAN is in the second area, that is, the RAN can maintain the connection to the UE. When the RAN is about to leave the second area, for subsequent steps, refer to related descriptions in FIG. 10 and the embodiment thereof.

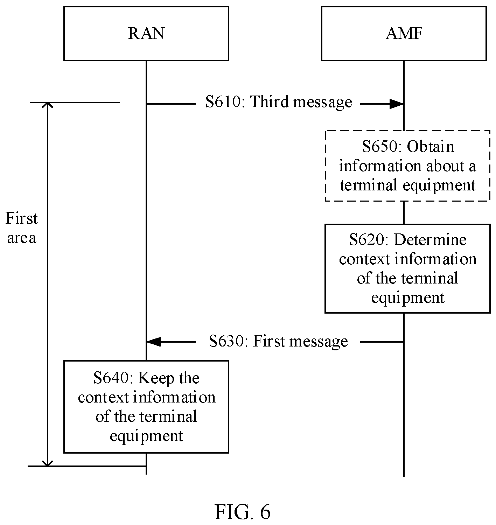

In the method procedure shown in FIG. 5A and FIG. 5B, the AMF actively triggers suspending. This application further provides a communication method in which the RAN actively triggers suspending. For ease of understanding, the following describes the communication method with reference to FIG. 6. It should be understood that this embodiment of this application describes only a difference between FIG. 6 and FIG. 5A and FIG. 5B.

FIG. 6 is a schematic flowchart of another communication method according to an embodiment of this application. The method includes the following steps.

S610: A RAN sends a third message to an AMF, or an AMF receives a third message from a RAN.

The third message indicates a second network device to store context information of a terminal equipment.

In some embodiments, the third message may be a UE context suspend request (UE context suspend request).

In this embodiment of this application, the third message includes a user plane context of the terminal equipment and/or a control plane context of the terminal equipment. For example, the first identifier is a resume identifier (resume ID), and the resume identifier may be used to resume a related configuration of the terminal equipment. For specific descriptions of the first identifier, refer to the foregoing descriptions.

In this embodiment of this application, the RAN may determine, based on at least one of sensing information, location information of the terminal equipment, and ephemeris information, to send the third message to the AMF.

In some embodiments, the RAN may determine, based on the sensing information, to send the third message to the AMF. When the RAN determines, based on the sensing information, that the RAN is currently not connected to the terminal equipment, the RAN determines to send the third message to the AMF.

It should be understood that the third message may be sent after the RAN enters a first area and is connected to the AMF.

The RAN may determine a connection status with the UE based on an underlying circuit sensing function or a connection status reported by a protocol stack at a physical layer. That the RAN determines, based on the sensing information, that the RAN is not connected to the terminal equipment may be understood as that the RAN learns that there is no service link connection to the terminal equipment in this case. The sensing information may be from the RAN or another device on-board. That there is no service link connection may be understood as that there is no direct service link connection between the RAN and the terminal equipment, or that there is no service link connection between the RAN and the terminal equipment after the RAN is connected through an inter-satellite link.

Optionally, after determining that the connection between the RAN and the terminal equipment is discontinuous, the RAN determines to send the third message to the AMF. In other words, the RAN may determine, based on a historical connection status, to send the third message to the core network device. When the connection between the RAN and the terminal equipment is disconnected, the RAN determines to send the third message to the AMF. Specifically, after resuming the connection to the AMF in the first area, the RAN sends the third message to the second network device.

In some embodiments, the RAN may determine, based on the location information of the terminal equipment, to send the third message to the AMF. When a communication range of the RAN cannot cover a location of the terminal equipment, the RAN determines to send the third message to the AMF.

Optionally, the location information (for example, UE location information, ULI) of the terminal equipment may include at least one of a tracking area identity (tracking area identity, TAI), a cell identity, or coordinate information.

In some embodiments, the RAN may determine, based on the ephemeris information, to send the third message to the AMF. The RAN determines, based on the ephemeris information, a first moment at which the RAN is to leave the first area, and before the first moment, the RAN determines to send the third message to the AMF.

Optionally, the RAN determines, based on the ephemeris information, a time period in which the RAN is in the first area, and in the time period, the RAN determines to send the third message to the AMF.

Optionally, the third message may include an S&F indicator (indicator) or a trigger (trigger). Specifically, the RAN may determine, based on at least one of the historical connection status, the location information of the terminal equipment, and the ephemeris information, that the UE can respond to an S&F service, and send the third message to the AMF, where the third message indicates the AMF to suspend the terminal equipment.

S620: The AMF determines the context information of the terminal equipment.

S630: The AMF sends a first message to the RAN, or the RAN receives a first message from the AMF.

The first message includes the first identifier.

It should be understood that, in this embodiment of this application, the first message may be carried in a UE context suspend response (context suspend response).

S640: The RAN keeps the context information of the terminal equipment.

Optionally, before S620, the method may further include the following steps:

S650: The AMF obtains first information.

For example, the AMF obtains information about the terminal equipment, including subscription information or the context information of the terminal equipment, and sends the first message to the RAN after determining that the terminal equipment can respond to the S&F service.

For descriptions of steps S620 to S650, refer to the descriptions in the embodiment in FIG. 5A and FIG. 5B. Details are not described herein again.

When the RAN is subsequently connected to the UE again, the RAN may resume the UE.

In some embodiments, the information about the terminal equipment further includes keep time for the context information of the terminal equipment. The first message further indicates the keep time for the context information of the terminal equipment by the access network device. When current time exceeds the keep time, the core network device deletes the context information of the terminal equipment.

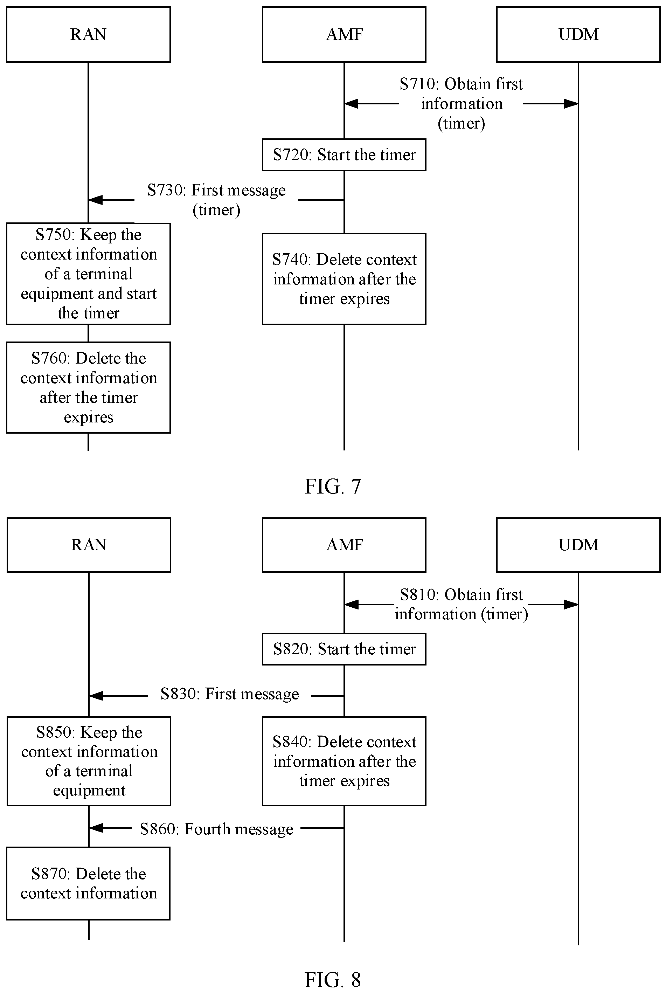

FIG. 7 is a schematic flowchart of another communication method according to an embodiment of this application. The method includes the following steps.

S710: An AMF obtains first information from a UDM.

It should be understood that, for a manner in which the AMF obtains the first information, refer to the related descriptions of step S520 in the embodiment in FIG. 5A and FIG. 5B. Details are not described herein again.

For example, the first information may be information about a terminal equipment (for example, subscription information), and further includes timer information, where the timer information indicates keep time for context information of the terminal equipment; or the timer information indicates S&F service time of the terminal equipment; or the AMF determines keep time for context information based on the timer information.

S720: The AMF starts a timer.

In some embodiments, the AMF may periodically send the keep time for the context information of the terminal equipment to the UDM.

It should be understood that, after the AMF starts the timer, if the AMF serving the UE changes, a new AMF may obtain the keep time for the context information of the terminal equipment from the UDM again, so as to maintain continuity of time records.

S730: The AMF sends a first message to a RAN, or a RAN receives a first message from the AMF.

The first message indicates the keep time for the context information of the terminal equipment by the RAN. When current time exceeds the keep time, the RAN deletes the context information of the terminal equipment.

S740: The AMF deletes the context information after the timer expires.

It should be understood that the keep time for the context information may include keep start time and keep end time, or a time length for keeping the context information, namely, time period information. After the timer expires, that is, when the current time exceeds the keep time, or when the current time of the AMF is later than the keep end time, or when the current keep time for the context information by the AMF exceeds the time length for keeping the context information, the AMF may delete the context information of the terminal equipment.

Expiration of the timer, namely, timeout of the timer may be understood as that the timer performs forward timing and exceeds a specified threshold (a time period length or end time), or may be understood as that the timer performs reverse timing and the timer reaches zero.

S750: The RAN keeps the context information of the terminal equipment and starts the timer.

S760: The RAN deletes the context information after the timer expires.

In this embodiment of this application, the AMF and the RAN maintain timer information of a context of a first terminal equipment based on the keep time, and delete the context of the first terminal equipment after the timer expires.

For example, an IoT device in a polar region needs to report data only from November to January. The keep time for the context information is set to include a working time range of the device, so that the RAN and the AMF can delete the context information of the terminal equipment in other time, thereby saving resources.

The method procedure described in FIG. 7 may be that the RAN records the keep time for the context information, and deletes the context information after the timer expires, to save resources. This application further provides another communication method. An AMF may indicate a RAN to delete context information. For ease of understanding, the following describes the communication method with reference to FIG. 8.

FIG. 8 is a schematic flowchart of another communication method according to an embodiment of this application. It should be understood that this embodiment of this application describes only a difference between FIG. 8 and FIG. 7.

S810: An AMF obtains first information from a UDM.

S820: The AMF starts a timer.

S830: The AMF sends a first message to a RAN, or a RAN receives a first message from the AMF.

The first message includes a first identifier, the first identifier indicates context information of a terminal equipment, and the first message indicates a first network device to store the context information of the terminal equipment.

S840: The AMF deletes the context information after the timer expires.

It should be understood that keep time for the context information may include keep start time and keep end time, or a time length for keeping the context information, namely, time period information.

After the timer expires, that is, when current time exceeds the keep time, or when the current time of the AMF is later than the keep end time, or when the current keep time for the context information by the AMF exceeds the time length for keeping the context information, the AMF may delete the context information of the terminal equipment.

S850: The RAN keeps the context information of the terminal equipment.

S860: The AMF sends a fourth message to the RAN, or the RAN receives a fourth message from the AMF.

The fourth message indicates the RAN to delete the context information of the terminal equipment.

Optionally, the fourth message may be suspend end indicator (suspend end indicator) information.

Optionally, the fourth message may include the first identifier, and the first identifier indicates a user plane context of the terminal equipment.

S870: The RAN deletes the context information.

In this way, after the AMF deletes the context information after the timer expires, the AMF may indicate, by using the fourth message, the RAN to delete the context information, to avoid recording the keep time for the context information in the RAN, thereby further saving resource overheads of the RAN.

The foregoing describes the suspend procedure in an S&F scenario with reference to FIG. 5A to FIG. 8. The following describes in detail a resume procedure in the S&F scenario with reference to FIG. 9 and FIG. 10. It should be understood that, in this embodiment of this application, because the satellite continuously moves, when the satellite enters a communication range in which the satellite can be connected to the gateway or the terminal equipment, the context of the terminal equipment stored in the suspend procedure needs to be resumed and data needs to be stored.

It should be understood that, when the satellite is connected to the UE, because the satellite is in a service link and has not set up a connection to a core network device, the resume procedure initiated by the UE cannot trigger resuming of an NG interface. In view of this, this application further provides a communication method, where a core network device triggers a resume procedure. For ease of understanding, the following describes the communication method with reference to FIG. 9.

FIG. 9 is a schematic flowchart of a communication method according to this application. The following steps are included.

S910: An AMF sends a UE context resume request (context resume request) to a RAN, or a RAN receives a UE context resume request from an AMF.

The UE context resume request may indicate the RAN to resume context information of a UE.

In some embodiments, the UE context resume request includes context information of a terminal equipment, and specifically, includes a user plane context of the terminal equipment and/or a control plane context of the terminal equipment.

In this embodiment of this application, the UE context resume request includes a first identifier, and the first identifier indicates the context information of the terminal equipment. For specific descriptions of the first identifier, refer to the foregoing descriptions.

Specifically, the AMF may determine, based on at least one of sensing information and ephemeris information, to send the UE context resume request to the RAN.

In some embodiments, the AMF may determine a connection status with the UE based on an underlying circuit sensing function or a connection status reported by a protocol stack at a physical layer. When determining that the AMF and the RAN resume feeding, the AMF determines to send the UE context resume request to the RAN.

Specifically, that the AMF determines, based on the sensing information, to send the UE context resume request to the RAN may be understood as that the AMF learns that there is a feeder link connection to the RAN in this case. The sensing information may be from the AMF. The feeder link connection between the AMF and the RAN may be understood as that there is a direct feeder link connection between the AMF and the RAN, or that there is a feeder link connection between the AMF and the RAN after the RAN is connected through an inter-satellite link.

In some embodiments, the AMF determines, based on the ephemeris information, to send the UE context resume request to the RAN. The AMF determines, based on the ephemeris information, a moment at which the RAN is to leave a first area, before the moment, the AMF determines to send the UE context resume request to the RAN.

Optionally, the AMF determines, based on the ephemeris information, a time period in which the RAN is in the first area, and in the time period, the AMF determines to send the UE context resume request to the RAN.

In some embodiments, the AMF may trigger UE-level resuming based on completion of an NG interface resume procedure.

In some embodiments, the RAN may trigger UE-level suspending based on completion of an NG interface suspend procedure.

S920: The RAN sends a UE context resume response (context resume response) to the AMF, or the AMF receives a UE context resume response from the RAN.

After receiving the UE context resume response, the AMF may re-set up a connection and a context of the UE based on information in the response, and continue to transmit data and provide a service for the UE.

In some embodiments, the UE context resume response includes the first identifier.

S930: The AMF sends, to the RAN, downlink signaling or data delivered by the SMF.

In this way, a core network device may trigger a resume procedure when determining, based on the sensing information, to connect to an access network device, or a core network device may trigger a resume procedure when determining, based on the ephemeris information, that an access network device enters a range in which communication can be performed.

The method procedure described in FIG. 9 may be that the core network device actively triggers the resume procedure, so that the UE performs resume in an S&F scenario. This application further provides another communication method, in which an access network device may actively trigger a resume procedure. For ease of understanding, the following describes the communication method with reference to FIG. 10.

FIG. 10 is a schematic flowchart of another communication method according to an embodiment of this application. The method includes the following steps.

S1010: A UE monitors a RAN based on ephemeris information.

Specifically, the UE may determine, based on the ephemeris information, a first moment at which the RAN is to enter a second area, and a terminal equipment monitors the RAN after the first moment.

Optionally, the UE determines, based on the ephemeris information, a time period in which the RAN is in a second area, and the UE determines to monitor the RAN in the time period.

It should be understood that when the RAN is in the second area, the RAN can set up a service link with the UE to perform a communication connection.

In this way, this application can avoid invalid monitoring performed by the UE when an access network device has not entered the second area, thereby saving resources.

Specifically, the UE may set up a connection to the RAN by using a random access process.

In some embodiments, the RAN sends a third message to the UE, or the UE receives a third message from the RAN.

The third message is used to resume the terminal equipment, the third message includes a second identifier, and the second identifier indicates to resume context information of the terminal equipment.

It should be understood that the third message in this embodiment of this application may be the second message in the embodiment in FIG. 5A and FIG. 5B, and corresponds to a process in which the UE resumes the connection to the RAN.

Further, after the UE is connected to the RAN, step S1020 is performed.

S1020: The UE sends a first message to the RAN, or the RAN receives a first message from the UE.

The first message may include information, data, signaling, or the like for resuming a context of the UE, for example, an uplink NAS PDU or a TAU signaling procedure. After receiving the first message from the UE, the RAN stores the data.

S1030: The RAN sends a second message to the UE, or the UE receives a second message from the RAN.

The second message indicates the terminal equipment to store context information, and the second message may include a first identifier.

Specifically, the RAN may determine, based on the ephemeris information, the first moment at which the RAN is to leave the second area, and before the first moment, the RAN determines to send the second message to the UE.

Optionally, the RAN may determine, based on the ephemeris information, the time period in which the RAN is in the second area, and in the time period, the RAN determines to send the second message to the UE.

It should be understood that, for a process in which the RAN sends the second message to the UE, refer to the process in which the RAN sends the third message to the AMF in FIG. 6. Details are not described herein again.

S1040: The UE performs suspension based on the second message.

The second message includes the context information of the terminal equipment.

It should be understood that the UE may suspend different channels based on the second message.

When the second message includes the first identifier, the UE may suspend a data radio bearer (data radio bearer, DRB) channel. When the second message includes the second identifier, the UE may suspend a signaling radio bearer (signaling radio bearer, SRB) channel. The SRB is used to transmit a control plane message, for example, control plane data such as a radio resource control (radio resource control, RRC) message or a non-access stratum (non-access stratum, NAS) message. The DRB may be used to transmit user plane data.

It should be understood that steps S1010 to S1040 may also be implemented in the embodiment shown in FIG. 9. This is not limited in this application.

After moving from the second area to the first area, the RAN performs steps S1050 to S1080.

S1050: The RAN sends a UE context resume request (context resume request) to the AMF, or the AMF receives a UE context resume request from the RAN.

Specifically, the RAN may determine, based on at least one of sensing information and ephemeris information, to send the UE context resume request to the AMF.

In some embodiments, the RAN may determine a connection status with the UE based on an underlying circuit sensing function or a connection status reported by a protocol stack at a physical layer. When determining that the AMF and the RAN resume feeding, the RAN determines to send the UE context resume request to the AMF.

In some embodiments, the RAN determines, based on the ephemeris information, to send the UE context resume request to the AMF. The RAN determines, based on the ephemeris information, a moment at which the RAN is to leave the first area, and before the moment, the RAN determines to send the UE context resume request to the AMF.

Optionally, the RAN determines, based on the ephemeris information, a time period in which the RAN is in the first area, and in the time period, the RAN determines to send the UE context resume request to the AMF.

Optionally, the UE context resume request may include the first identifier.

S1060: The AMF sends a UE context resume response (context resume response) to the RAN, or the RAN receives a UE context resume response from the AMF.

S1070: The RAN uploads information, data, and the like from the UE for resuming a context to the AMF and the SMF.

S1080: The AMF sends, to the RAN, downlink signaling or data delivered by the SMF.

In this way, the RAN can resume the connection to the AMF when entering the first area.

It should be understood that the embodiment of the resume procedure described with reference to FIG. 9 and FIG. 10 may be performed before the suspend procedures in FIG. 5A to FIG. 8.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, a UE, a RAN, or an AMF) in an existing network architecture is mainly used as an example for description. It should be understood that a specific form of the device is not limited in embodiments of this application. For example, all devices that can implement a same function in the future are applicable to embodiments of this application.

It can be understood that, in the foregoing method embodiments, the method and the operation implemented by the device (for example, the UE, the RAN, or the AMF) may alternatively be implemented by a component (for example, a chip or a circuit) of the device.

The communication methods provided in embodiments of this application are described in detail above with reference to FIG. 5A to FIG. 10. The foregoing communication methods are mainly described from a perspective of interaction between network elements. It can be understood that to implement the foregoing functions, each network element includes a corresponding hardware structure and/or software module for performing each function.

A person skilled in the art should be aware that units and algorithm steps in the examples described with reference to embodiments disclosed in this specification can be implemented by hardware or a combination of hardware and computer software in this application. Whether functions are executed by hardware or hardware driven by computer software depends on particular applications and design constraints of the technical solutions. A person skilled in the art may use different methods to implement the described functions for each particular application, but it should not be considered that the implementation goes beyond the scope of this application.

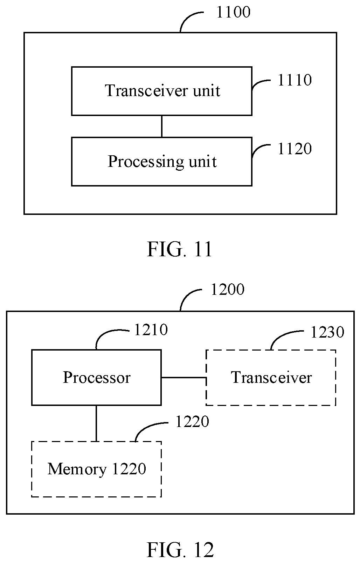

Communication apparatuses provided in embodiments of this application are described in detail below with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described again.

FIG. 11 is a block diagram of an apparatus 1100 according to an embodiment of this application. The apparatus 1100 includes a transceiver unit 1110 and a processing unit 1120. The transceiver unit 1110 may implement a corresponding communication function, and the processing unit 1120 is configured to process data. The transceiver unit 1110 may also be referred to as a communication interface or a communication unit. When implementing a function of obtaining information, the transceiver unit 1110 may also be referred to as an obtaining unit.

Optionally, the apparatus 1100 may further include a storage unit. The storage unit may be configured to store instructions and/or data. The processing unit 1120 may read the instructions and/or the data in the storage unit, to enable the apparatus to implement the foregoing method embodiments.

The apparatus 1100 may be configured to perform actions performed by the device (for example, the first network device and the second network device, or the UE, the RAN, the AMF, or the like) in the foregoing method embodiments. In this case, the apparatus 1100 may be a device or a component that can be configured in a device. The transceiver unit 1110 is configured to perform a receiving and sending related operation of the device in the foregoing method embodiments. The processing unit 1120 is configured to perform a processing related operation of the device in the foregoing method embodiments.

In a design, the apparatus 1100 is configured to perform actions performed by the UE in the method embodiments described above.

The transceiver unit 1110 is configured to: monitor a first network device based on ephemeris information, and receive a first message, where the first message indicates a first terminal equipment to suspend.

The processing unit 1120 is configured to perform suspension based on the first message.

The apparatus 1100 may implement the steps or procedures performed by the UE in the method embodiments according to embodiments of this application. The apparatus 1100 may include units configured to perform the methods performed by the UE in the method embodiments. In addition, the units in the apparatus 1100 and the foregoing other operations and/or functions are respectively used to implement corresponding procedures in the method embodiments of the UE in the method embodiments.

When the apparatus 1100 is configured to perform the method in FIG. 5A and FIG. 5B, the transceiver unit 1110 may be configured to perform the receiving and sending steps in the method, for example, step S550; and the processing unit 1120 may be configured to perform the processing steps in the method, for example, step S560.

When the apparatus 1100 is configured to perform the method in FIG. 10, the transceiver unit 1110 may be configured to perform the receiving and sending steps in the method, for example, steps S1020 and S1030; and the processing unit 1120 may be configured to perform the processing steps in the method, for example, step S1040.

It should be understood that a specific process in which the units perform the foregoing corresponding steps is described in detail in the foregoing method embodiments, and for brevity, details are not described herein.

In another design, the apparatus 1100 is configured to perform actions performed by the first network device in the foregoing method embodiments.

The transceiver unit 1110 is configured to receive a first message from the second network device, where the first message includes a first identifier, the first identifier indicates context information of the first terminal equipment, and the first message indicates the first network device to store the context information of the first terminal equipment.

The transceiver unit 1110 is configured to send a second message to the first terminal equipment based on the first message, where the second message indicates the first terminal equipment to perform suspension.

Alternatively, the transceiver unit 1110 is configured to receive the first message from the first terminal equipment;

The apparatus 1100 may implement the steps or the procedures performed by the first network device in the method embodiments according to embodiments of this application. The apparatus 1100 may include units configured to perform the method performed by the first network device in the method embodiments. In addition, the units in the apparatus 1100 and the foregoing other operations and/or functions are respectively used to implement corresponding procedures in the method embodiments of the RAN in the method embodiments.

When the apparatus 1100 is configured to perform the method in FIG. 5A and FIG. 5B, the transceiver unit 1110 may be configured to perform the receiving and sending steps in the method, for example, steps S510, S530, and S550; and the processing unit 1120 may be configured to perform the processing steps in the method, for example, step S540.

When the apparatus 1100 is configured to perform the method in FIG. 6, the transceiver unit 1110 may be configured to perform the receiving and sending steps in the method, for example, steps S610 and S630; and the processing unit 1120 may be configured to perform the processing steps in the method, for example, step S640.

When the apparatus 1100 is configured to perform the method in FIG. 7, the transceiver unit 1110 may be configured to perform the receiving and sending steps in the method, for example, step S730; and the processing unit 1120 may be configured to perform the processing steps in the method, for example, steps S750 and S760.

When the apparatus 1100 is configured to perform the method in FIG. 8, the transceiver unit 1110 may be configured to perform the receiving and sending steps in the method, for example, steps S830 and S860; and the processing unit 1120 may be configured to perform the processing steps in the method, for example, steps S850 and S870.

When the apparatus 1100 is configured to perform the method in FIG. 9, the transceiver unit 1110 may be configured to perform the receiving and sending steps in the method, for example, steps S910, S920, and S930, and the processing unit 1120 may be configured to perform the processing steps in the method.

When the apparatus 1100 is configured to perform the method in FIG. 10, the transceiver unit 1110 may be configured to perform the receiving and sending steps in the method, for example, steps S1020 and S1030; and the processing unit 1120 may be configured to perform the processing steps in the method, for example, steps S1010 and S1040.

It should be understood that a specific process in which the units perform the foregoing corresponding steps is described in detail in the foregoing method embodiments, and for brevity, details are not described herein.

In another design, the apparatus 1100 is configured to perform actions performed by the second network device in the foregoing method embodiments.

The transceiver unit 1110 is configured to send a first message to the first network device based on first information, where the first message includes a first identifier, the first identifier indicates context information of a first terminal equipment, and the first message indicates the first network device to store the context information of the first terminal equipment.

The apparatus 1100 may implement the steps or the procedures performed by the second network device in the method embodiments according to embodiments of this application. The apparatus 1100 may include units configured to perform the method performed by the second network device in the method embodiments. In addition, the units in the apparatus 1100 and the foregoing other operations and/or functions are used to implement corresponding procedures in the method embodiment of the second network device in the method embodiments.

When the apparatus 1100 is configured to perform the method in FIG. 5A and FIG. 5B, the transceiver unit 1110 may be configured to perform the receiving and sending steps in the method, for example, steps S510 and S530; and the processing unit 1120 may be configured to perform the processing steps in the method, for example, step S523.

When the apparatus 1100 is configured to perform the method in FIG. 6, the transceiver unit 1110 may be configured to perform the receiving and sending steps in the method, for example, steps S610 and S630; and the processing unit 1120 may be configured to perform the processing steps in the method, for example, step S620.

When the apparatus 1100 is configured to perform the method in FIG. 7, the transceiver unit 1110 may be configured to perform the receiving and sending steps in the method, for example, step S730; and the processing unit 1120 may be configured to perform the processing steps in the method, for example, steps S720 and S740.

When the apparatus 1100 is configured to perform the method in FIG. 8, the transceiver unit 1110 may be configured to perform the receiving and sending steps in the method, for example, steps S830 and S860; and the processing unit 1120 may be configured to perform the processing steps in the method, for example, steps S820 and S840.

When the apparatus 1100 is configured to perform the method in FIG. 9, the transceiver unit 1110 may be configured to perform the receiving and sending steps in the method, for example, steps S910, S920, and S930, and the processing unit 1120 may be configured to perform the processing steps in the method.

When the apparatus 1100 is configured to perform the method in FIG. 10, the transceiver unit 1110 may be configured to perform the receiving and sending steps in the method, for example, steps S1050, S1060, S1070, and S1080; and the processing unit 1120 may be configured to perform the processing steps in the method.

It should be understood that a specific process in which the units perform the foregoing corresponding steps is described in detail in the foregoing method embodiments, and for brevity, details are not described herein.

The processing unit 1120 in the foregoing embodiment may be implemented by at least one processor or a processor-related circuit. The transceiver unit 1110 may be implemented by a transceiver or a transceiver-related circuit. The storage unit may be implemented by at least one memory.

As shown in FIG. 12, an embodiment of this application further provides an apparatus 1200. The apparatus 1200 includes a processor 1210, and may further include one or more memories 1220. The processor 1210 is coupled to the memory 1220. The memory 1220 is configured to store a computer program or instructions and/or data. The processor 1210 is configured to execute the computer program or the instructions and/or the data stored in the memory 1220, so that the methods in the foregoing method embodiments are performed. Optionally, the apparatus 1200 includes one or more processors 1210.

Optionally, the memory 1220 may be integrated with the processor 1210, or separately disposed.

Optionally, as shown in FIG. 12, the apparatus 1200 may further include a transceiver 1230, and the transceiver 1230 is configured to receive and/or send a signal. For example, the processor 1210 is configured to control the transceiver 1230 to receive a signal and/or send a signal.

In a solution, the apparatus 1200 is configured to implement operations executed by the device (like the UE, the RAN, or the AMF) in the foregoing method embodiments.

This application further provides a communication apparatus, including a processor and a memory. The memory is configured to store instructions, and the processor is configured to invoke and run the instructions stored in the memory, so that the communication apparatus performs the method of the first network device, the second network device, or the first terminal equipment in the foregoing embodiments.

This application further provides a chip including a processor configured to invoke and run instructions stored in the memory, so that a communication apparatus in which the chip is mounted performs the methods in the foregoing embodiments.

This application further provides another chip including an input interface, an output interface, and a processor. The input interface, the output interface, and the processor are connected to each other through an internal connection path. The processor is configured to execute code in a memory. When the code is executed, the processor is configured to perform the methods in the foregoing embodiments. Optionally, the chip further includes the memory. The memory is configured to store a computer program or the code.

This application further provides a processor, configured to be coupled to a memory, and configured to perform the method and the function that are related to the second network device or the first network device in any one of the foregoing embodiments.

Another embodiment of this application provides a computer program product including a computer program or instructions. When the computer program product runs on a computer, the method in the foregoing embodiments is implemented.

An embodiment of this application further provides a computer-readable storage medium. The computer-readable storage medium stores computer instructions used to implement the method performed by the device (for example, the UE, the RAN, or the AMF) in the foregoing method embodiments.

For example, when a computer program is executed by a computer, the computer is caused to implement the method performed by the network device in the foregoing method embodiments.

An embodiment of this application further provides a computer program product including instructions. When the instructions are executed by a computer, the computer is caused to implement the method performed by the device (for example, the UE, the RAN, or the AMF) in the foregoing method embodiments.

An embodiment of this application further provides a communication system. The communication system includes the device (for example, the UE, the RAN, or the AMF) in the foregoing embodiments.

For explanations and beneficial effects of related content in any one of the apparatuses provided above, refer to the corresponding method embodiment provided above. Details are not described herein again.

For ease of understanding of embodiments of this application, the following several points are described.

First, in this application, "indicate" may include "directly indicating" and "indirectly indicating". When a message is described to indicate A, the message may directly indicate A or indirectly indicate A, but it does not indicate that the message definitely carries A.

Information indicated by the message is referred to as to-be-indicated information. In a specific implementation process, the to-be-indicated information may be indicated in a plurality of manners, for example, but not limited to, a manner in which the to-be-indicated information, for example, the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to a specific extent. In addition, a common part of all pieces of information may be identified and indicated in a unified manner, to reduce indication overheads caused by separately indicating same information.

In addition, a function implemented by the "indication information" in embodiments of this application may be implemented by a "message". For example, the "message" does not include the "indication information", but the "message" has a function of the "indication information".

Second, various numeric numbers such as first and second (for example, "#1" and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in such a way are interchangeable in an appropriate circumstance, so that a solution other than embodiments of this application can be described.

Third, in this application, the term "pre-configuration" may include predefinition, for example, definition in a protocol. "Predefined" may be implemented by pre-keeping corresponding code or a corresponding table in a device (including, for example, network elements), or may be implemented in another manner of indicating related information. A specific implementation of the "predefinition" is not limited in this application.

Fourth, "being kept" in embodiments of this application may be "being kept in one or more memories". The one or more memories may be separately disposed, or may be integrated into an encoder or a decoder, a processor, or a communication apparatus. Alternatively, a part of the one or more memories may be separately disposed, and a part of the one or more memories may be integrated into the decoder, the processor, or the communication apparatus. A type of the memory may be a storage medium in any form. This is not limited in this application.

Fifth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification usually indicates an "or" relationship between associated objects.

Sixth, "protocols" in embodiments of this application may be standard protocols in the communication field, for example, may include a 5G protocol, a new radio (new radio, NR) protocol, and a related protocol applied to a future communication system. This is not limited in this application.

It should be understood that, in this application, a context content of the UE is rich, and is also different in different entities. For example, a UE context in a base station includes but is not limited to: a context of each bearer of the UE, a capability of the UE, a mobility context of the UE, a security context, and an identifier of the UE. The context of each bearer of the UE includes but is not limited to: an identifier of the UE, QoS information of the UE bearer, and channel information of the bearer (for example, an IP address on a base station side, a channel identifier, an IP address on a gateway side, and a channel identifier).

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

A person of ordinary skill in the art may be aware that units and algorithm steps in the examples described with reference to embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to the corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network device, a first message from a second network device, wherein the first message comprises a first identifier, and the first identifier indicates context information of a first terminal equipment; and
the first network device maintains a connection to the second network device in a first area, and the first network device maintains a connection to the first terminal equipment in a second area, wherein the first area is different from the second area.

2. The method according to claim 1, wherein the first message indicates the first network device to store the context information of the first terminal equipment.

3. The method according to claim 2, wherein before receiving, by the first network device, the first message from the second network device, the method further comprises:
sending, by the first network device, a third message to the second network device, wherein the third message comprises the first identifier, and the third message indicates the second network device to store the context information of the first terminal equipment.

4. The method according to claim 3, wherein sending, by the first network device, the third message to the second network device comprises:
determining, by the first network device based on at least one of sensing information, location information of the first terminal equipment, and ephemeris information, to send the third message to the second network device.

5. The method according to claim 4, wherein determining, by the first network device based on the at least one of the sensing information, the location information of the first terminal equipment, and the ephemeris information, to send the third message to the second network device comprises:
determining, by the first network device based on the sensing information, to send the third message to the second network device, wherein when the first network device determines, based on the sensing information, that the first network device is not connected to the first terminal equipment, the first network device determines to send the third message to the second network device; or
determining, by the first network device based on the location information of the first terminal equipment, to send the third message to the second network device, wherein when a communication range of the first network device is not capable of covering a location of the first terminal equipment, the first network device determines to send the third message to the second network device; or
determining, by the first network device based on the ephemeris information, to send the third message to the second network device, wherein the first network device determines, based on the ephemeris information, a first moment at which the first network device is to leave the first area, and before the first moment, the first network device determines to send the third message to the second network device.

6. The method according to any one of claims 1 to 5, wherein the context information of the first terminal equipment comprises a user plane context of the first terminal equipment and/or a control plane context of the first terminal equipment.

7. The method according to any one of claims 1 to 6, wherein the first message further indicates keep time for the context information of the first terminal equipment by the first network device, and when current time exceeds the keep time, the first network device deletes the context information of the first terminal equipment.

8. The method according to any one of claims 1 to 6, wherein the method further comprises:
receiving, by the first network device, a fourth message from the second network device, wherein the fourth message indicates the first network device to delete the context information of the first terminal equipment.

9. The method according to any one of claims 1 to 8, wherein the method further comprises: after the first network device receives the first message from the second network device, sending, by the first network device, a second message to the first terminal equipment, wherein the second message comprises a second identifier, and the second identifier indicates to resume the context information of the first terminal equipment.

10. A communication method, comprising:
receiving, by a first network device, a third message from a first terminal equipment; and
determining, by the first network device based on at least one of sensing information and ephemeris information, to send a first message to a second network device, wherein the first message comprises a first identifier, and the first identifier indicates context information of the first terminal equipment; and
the first network device maintains a connection to the second network device in a first area, and the first network device maintains a connection to the first terminal equipment in a second area, wherein the first area is different from the second area.

11. The method according to claim 10, wherein the first message is used to resume the context information of the first terminal equipment.

12. The method according to claim 11, wherein after receiving, by the first network device, the third message from the first terminal equipment, the method further comprises:
determining, by the first network device based on the ephemeris information, to send a second message to the first terminal equipment, wherein the second message comprises the first identifier, and the second message indicates the first terminal equipment to store the context information.

13. The method according to claim 12, wherein determining, by the first network device based on the ephemeris information, to send the second message to the first terminal equipment comprises:
determining, by the first network device based on the ephemeris information, a first moment at which the first network device is to leave the second area, and before the first moment, determining, by the first network device, to send the second message to the first terminal equipment.

14. The method according to any one of claims 10 to 13, wherein determining, by the first network device based on the at least one of the sensing information and the ephemeris information, to send the first message to the second network device comprises:
determining, by the first network device based on the sensing information, to send the first message to the second network device, wherein when the first network device determines, based on the sensing information, to connect to the second network device, the first network device determines to send the first message to the second network device; or
determining, by the first network device based on the ephemeris information, to send the first message to the second network device, wherein the first network device determines, based on the ephemeris information, a second moment at which the first network device is to leave the first area, and before the second moment, the first network device determines to send the first message to the second network device.

15. The method according to any one of claims 10 to 14, wherein the context information of the first terminal equipment comprises a user plane context of the first terminal equipment and/or a control plane context of the first terminal equipment.

16. The method according to any one of claims 10 to 15, wherein the method further comprises: sending, by the first network device, the third message to the second network device, and/or receiving, by the first network device, a fourth message from the second network device.

17. A communication method, comprising:
determining, by a second network device based on first information, to send a first message to a first network device, wherein the first message comprises a first identifier, and the first identifier indicates context information of a first terminal equipment; and
the first network device maintains a connection to the second network device in a first area, and the first network device maintains a connection to the first terminal equipment in a second area, wherein the first area is different from the second area.

18. The method according to claim 17, wherein the first message indicates the first network device to store the context information of the first terminal equipment.

19. The method according to claim 17, wherein the first information comprises information about the first terminal equipment and/or ephemeris information, and determining, by the second network device based on the first information, to send the first message to the first network device comprises:
when the second network device determines, based on the information about the first terminal equipment, that the first terminal equipment is capable of responding to storage and forwarding, determining, by the second network device, to send the first message to the first network device; or
when the second network device determines, based on the ephemeris information, that the first network device is capable of leaving the first area, determining, by the second network device, to send the first message to the first network device.

20. The method according to any one of claims 17 to 19, wherein the information about the first terminal equipment is the context information of the first terminal equipment or configuration information of the first terminal equipment.

21. The method according to any one of claims 17 to 20, wherein the method further comprises:
determining, by the second network device based on the ephemeris information, a first moment at which the first network device is to leave the first area, and before the first moment, determining, by the second network device based on the information about the first terminal equipment, to send the first message to the first network device.

22. The method according to any one of claims 17 to 21, wherein before determining, by the second network device based on the first information, to send the first message to the first network device, the method further comprises:
receiving, by the second network device, a second message from the first network device, wherein the second message indicates the second network device to store the context information of the first terminal equipment.

23. The method according to any one of claims 17 to 22, wherein the context information of the first terminal equipment comprises a user plane context of the first terminal equipment and/or a control plane context of the first terminal equipment.

24. The method according to any one of claims 17 to 23, wherein the first information further comprises keep time for the context information of the first terminal equipment; and
the first message further indicates keep time for the context information of the first terminal equipment by the first network device, and when current time exceeds the keep time, the second network device deletes the context information of the first terminal equipment.

25. The method according to any one of claims 17 to 23, wherein the first information further comprises keep time for the context information of the first terminal equipment; and
when current time exceeds the keep time, the second network device deletes the context information of the first terminal equipment, and sends a third message to the first network device, wherein the third message indicates the first network device to delete the context information of the first terminal equipment.

26. The method according to any one of claims 17 to 25, wherein the method further comprises: determining, by the second network device based on at least one of sensing information and the ephemeris information, to send a fourth message to the first network device, wherein the fourth message indicates the first network device to perform resumption

27. The method according to any one of claims 17 to 25, wherein the method further comprises: determining, by the second network device based on sensing information, to send a fourth message to the first network device, wherein when the second network device determines, based on the sensing information, to connect to the first network device, the second network device determines to send the fourth message to the first network device; or determining, by the second network device based on the ephemeris information, to send a fourth message to the first network device, wherein before the second moment, the second network device determines, based on the ephemeris information, a second moment at which the first network device is to leave the first area, and the second network device determines to send the fourth message to the first network device; or determining, by the second network device based on service information of the first terminal equipment, to send a fourth message to the first network device.

28. The method according to any one of claims 17 to 27, wherein the fourth message comprises a user plane context of the first terminal equipment and/or a control plane context of the first terminal equipment.

29. A communication apparatus, comprising a processing circuit and an input/output interface, wherein the input/output interface is configured to input and/or output a signal, and the processing circuit is configured to perform the method according to any one of claims 1 to 9, or the processing circuit is configured to perform the method according to any one of claims 10 to 16, or the processing circuit is configured to perform the method according to any one of claims 17 to 28.

30. A communication apparatus, comprising a processor and a memory, wherein the memory stores a computer program or instructions, and the processor is configured to execute the computer program or the instructions, so that the communication apparatus performs the method according to any one of claims 1 to 9, or the communication apparatus performs the method according to any one of claims 10 to 16, or the communication apparatus performs the method according to any one of claims 17 to 28.
